# EUROPÄISCHE PATENTSCHRIFT

(11) **EP 1 568 554 B1**
(45) Veröffentlichungstag und Bekanntmachung des Hinweises auf die Patenterteilung: **25.11.2009**
(21) Anmeldenummer: 05003706.8
(22) Anmeldetag: 22.02.2005
(51) Int. Cl.: B60R 25/02, B21C 37/08, B62D 1/16, F16D 7/02

(54) **Blockierhülse für eine Lenksäule und Verfahren zur Herstellung derselben**
Blocking sleeve for a steering column
Manchon d'immobilisation pour un colonne de direction

(30) Priorität: 26.02.2004 AT 3092004
(43) Veröffentlichungstag der Anmeldung: 31.08.2005
(73) Patentinhaber: ThyssenKrupp Presta Aktiengesellschaft, 9492 Eschen (LI)
(72) Erfinder: Heiml, Roland, Dipl.-Ing., 4870 Vöcklamarkt (AT)
(74) Vertreter: Secklehner, Günter

(56) Entgegenhaltungen:
- EP-B- 0 204 621
- DE-A1- 3 435 084
- DE-A1- 3 700 741
- GB-A- 2 298 837
- US-A- 2 202 909
- US-A- 5 937 500

## Beschreibung

Die Erfindung betrifft eine Blockierhülse für eine Lenkspindel einer Lenkungsanlage eines Kraftfahrzeugs sowie eine Lenkungsanlage, wie in den Oberbegriffen der Ansprüche 1 und 9 beschrieben.

Es ist bei Lenkungsanlagen für Kraftfahrzeuge erforderlich, dass diese mit einer Vorrichtung zum bedarfsweisen Blockieren einer Drehbewegung einer Lenkspindel ausstattet sind, um eine ungewünschte Inbetriebnahme eines Kraftfahrzeuges durch Sperren des Lenkeinschlages an der Lenkungsanlage zu verhindern. Hierzu wird ein in eine Freigabe- oder Sperrstellung überführbares Sperrglied des Lenkschlosses mit einer an der Lenkspindel starr befestigten Blockierhülse in Eingriff gebracht, sodass aufgrund der gegen Verdrehung gesperrten Lenkspindel eine wirksame Diebstahlsicherung für das Kraftfahrzeug geschaffen wird. Um nun eine Beschädigung des Lenkschlosses oder der Lenkspindel durch einen Gewaltbruch aufgrund eines unzulässig hohen, an der Lenkspindel anliegenden Drehmomentes zu vermeiden, sind im Stand der Technik Vorrichtungen zum Sperren von Lenkungsanlagen bekannt, die eine nachgiebige Verdrehsperre mit einer Drehmomentbegrenzung aufweisen. Bei diesen Vorrichtungen kann die Lenkspindel ab einem gewissen Grenzdrehmoment gegenüber der Blockierhülse durchrutschen, wodurch eine Deformierung oder ein Bruch der Lenkspindel oder des Lenkschlosses verhindert wird.

Eine derartige Vorrichtung ist beispielsweise aus der EP 0 204 621 B 1 bekannt. In dieser wird eine Vorrichtung zur Sperrung der Drehung mit Momentbegrenzung für eine Kraftfahrzeug- Lenkspindel beschrieben, die aus einer auf der Lenkspindel angebrachten Hülse besteht, in deren äußere Oberfläche Aussparungen zur Aufnahme eines Riegels eines Lenkungsschlosses zur Sperrung der genannten Lenkspindel ausgespart sind. Weiters sind verformbare Mittel vorgesehen, die den Wert der zur Drehung der genannten Lenkspindel relativ zur Hülse zu überwindenden Reibungsbelastung festlegen. Die Hülse ist auf der Lenkspindel mit einer Klemmspannung angebracht, die die Verformung mindestens eines der beiden Teile, Hülse und Säule, bis zur Überschreitung der Elastizitätsgrenze des Materials aus dem es besteht, bewirkt, wobei dann die Restspannung konstant bleibt und lediglich von der Restelastizität des Materials, aus dem das verformte Teil besteht, und von der mit dem genannten verformten Teil in Berührung stehenden Länge des anderen Teils abhängt.

Nachteilig ist hierbei, dass bei der Montage einer bereits vorgefertigten, hohlprofilartigen bzw. rohrförmigen Hülse auf der Lenkspindel, was durch Aufschieben der Hülse auf die Lenkspindel erfolgt, aufgrund des durch die Klemmspannung zwischen Hülse und Lenkspindel entstehenden Reibschlusses ein gegenseitiger Materialabrieb an den Kontaktflächen erfolgt. Somit wird die Oberflächenqualität an der Lenkspindel und der Hülse, beispielsweise durch Riefenbildung, beeinträchtigt sowie die Festigkeit der reibschlüssigen Verbindung zwischen Hülse und Lenkspindel vermindert. Eine Reproduzierbarkeit von im Wesentlichen gleichen Verbindungsfestigkeiten zwischen Lenkspindel und Hülse ist aufgrund des unkontrollierbaren Materialabriebs nicht möglich.

Aus der DE 100 12 323 A1 ist eine Diebstahlsicherungsmanschette für die Lenkspindel eines Kraftfahrzeugs beschrieben, die unter Krafteinwirkung lösbar ist. Die Diebstahlsicherungsmanschette wird dabei von einem mit einem Profil versehenen Rohrabschnitt gebildet, der unter Krafteinwirkung auf die Lenkspindel aufgeschoben wird und mit Riefen versehen ist. Die Riefen definieren auf der Außenseite erhabene und vertiefte Bereiche, die geeignet sind mit einem Riegel eines Verriegelungsmechanismus der Lenkspindel zusammenzuwirken und es stellen diese an der Innenseite gegenüber den vertieften Bereichen an der Außenseite die Kontaktflächen mit der Lenkspindel dar.

Nachteilig ist hierbei, dass beim Aufschieben der Diebstahlsicherungsmanschette auf die Lenkspindel wiederum ein Materialabrieb an den Kontaktflächen erfolgt und eine Minderung der Oberflächenqualität und Verbindungsfestigkeit daraus resultiert.

In der WO 02/02377 A1 ist eine Überlastsicherung an einer Fügeverbindung und ein Verfahren zur Herstellung der Überlastsicherung beschrieben. Die Überlastsicherung besteht aus einem äußeren Fügeteil mit einer Durchgangsöffnung, insbesondere einer Hülse, und einem zylindrischen, inneren mit einem Drehmoment beaufschlagten Fügeteil, insbesondere einer Lenkspindel, wobei die Teile reibschlüssig miteinander verbunden sind. Bei Übersteigen eines der maximal zulässigen Reibkraft entsprechenden Drehmomentwertes löst sich der Reibschluss und das innere Fügeteil in der Verbindung rutscht durch. Die Montage des äußeren Fügeteils bzw. der Hülse erfolgt dabei derart, dass der innere Fügeteil, also die Lenkspindel, plastisch aufgeweitert wird und unter Aufweitung des elastisch rückfedernden äußeren Fügeteils angepresst ist. Somit ist eine spezielle Vorrichtung und ein aufwendiges Verfahren zur Aufweitung der Lenkspindel im Verbindungsabschnitt notwendig, wobei das verwendete Verfahren dem der partiellen Innenhochdruckumformung mittels Fluidhochdruckes entspricht.

Zudem wird von der Automobilindustrie gefordert, dass während eines Prüfzyklus, bei dem das Lenkrad mit verriegeltem Lenkschloss abwechselnd je einige Male, z.B. 5 mal, um 360° nach links und rechts gedreht wird, die nachgiebige Verdrehsperre weder blockiert noch das Drehmoment unter 100Nm absinkt. Dies stellt besondere Anforderungen an die Einrichtung zur Drehmomentbegrenzung.

Eine Blockierhülse für eine Lenkspindel einer Lenkungsanlage eines Kraftfahrzeuges ist auch aus der US 5,937,500 A bekannt, die einen auf der Lenkspindel angeordneten Hülsenkörper ausbildet, der durch gemeinsame Verformung mit der Lenkspindel auf dieser montiert ist und in Umfangsrichtung voneinander beabstandete Rastausnehmungen aufweist, die mit einem zwischen einer Freigabe- und Sperrstellung verstellbaren Sperrglied der Lenkungsanlage in Eingriff bringbar sind. Die Verformung bestimmt den Reibschluss zwischen dem Hülsenkörper und der Lenkspindel, wobei die Blockierhülse die Lenkspindel bis zum Auftreten eines Grenzdrehmomentes gegen Verdrehung blockiert und bei Überschreiten des Grenzdrehmomentes die Lenkspindel gegenüber der Blockierhülse durchrutscht. Anderenfalls kann zwischen dem Hülsenkörper und der Lenkspindel ein reibungsverminderndes Material, wie eine Kunststoffbeschichtung am Hülsenkörper oder auf der Lenkspindel vorgesehen werden.

Schließlich offenbart die US 2,202,909 A einen aus einem ebenen Blechzuschnitt durch Stanzen und Umformung hergestellten Hülsenkörper, der über ein in einer Trennfuge verlaufendes Verbindungselement unlösbar zu einem geschlossenen Hohlprofil verbunden ist.

Aufgabe der Erfindung ist es eine Blockierhülse zu schaffen, die sich auf eine Lenkspindel einer Lenkungsanlage einfach montieren lässt. Die Blockierhülse soll in vorteilhafter Weise in einer Lenkungsanlage eines Kraftfahrzeugs verwendet werden.

Die Aufgabe der Erfindung wird durch die Merkmale im Anspruch 1 gelöst. Der Vorteil liegt darin, dass die Schmiertaschen im Lagerabschnitt der Blockierhülse zur Montage an der Lenkspindel mit einem Schmierstoff befüllbar oder benetzbar sind, wodurch der Gleitreibungskoeffizient zwischen Außenoberfläche der Lenkspindel sowie Stützfläche der Blockierhülse wesentlich herabgesetzt wird, die Bildung von Passungsrost zwischen den unter großer Flächenpressung stehenden Reibpartner Blockierhülse/Lenkspindel verhindert und das Aufschieben der Blockierhülse auf die Lenkspindel erleichtert wird. Ein gegenseitiger Materialabrieb bzw. ein Fressen zwischen Blockierhülse und Lenkspindel kann somit stark verringert bzw. verhindert werden, sodass die Oberflächenqualität an der Lenkspindel nach dem Aufschiebevorgang über die Aufschiebelänge nicht oder nur unwesentlich beeinträchtigt ist und die Festigkeit der reibschlüssigen Verbindung an der Montageposition der Blockierhülse auf der Lenkspindel nicht durch Beschädigung der Oberflächen im reibschlüssigen Verbindungsbereich beeinträchtigt wird. Weiters ist eine Reproduzierbarkeit der Verbindungsfestigkeit des genannten Reibschlusses gegeben, da der unkontrollierbare Einflussfaktor des ungleichmäßigen Materialabriebs beim Aufschieben der Blockierhülse auf die Lenkspindel wegfällt. Ein weiterer Vorteil besteht darin, dass auch nach durchlaufenem Prüfzyklus, d.h. nach ca. 5 erfolgten Lenkradumdrehungen je in Rechts- bzw. Linksrichtung, ein Reibschluss mit ausreichender Festigkeit zwischen Blockierhülse und Lenkspindel aufgebaut werden kann, sodass sich der Reibschluss bei in einem Kraftfahrzeug in Betrieb befindlicher Lenkungsanlage erst bei Übersteigen eines der maximalen Reibkraft entsprechenden Grenzdrehmomentwertes löst.

Die Ansprüche 2 bis 7 beschreiben vorteilhafte und auf den Anwendungsfall abgestimmte Ausgestaltungen der Schmiertaschen im Lagerabschnitt.

Gemäß den Ausgestaltungen nach den Ansprüchen 2 und 3 wird ein einfacher und effektiver Aufbau des innenliegenden Bereichs im Lagerabschnitt zur Speicherung und Abgabe eines Schmierstoffs erreicht, sodass einerseits während des Aufschiebens der Blockierhülse auf die Lenkspindel die Kontaktflächen mit einem Schmierstoff benetzt werden und andererseits die Stützfläche im Lagerabschnitt ausreichend groß bemessen ist, sodass diese in der Montagestellung eine reibschlüssige Verbindung mit der Lenkspindel, die eine ausreichende Festigkeit aufweist, eingehen kann.

Die in Anspruch 4 angeführten Merkmale sind vorteilhaft, da durch einen abgewinkelten Verlauf der Schmiertaschen gegenüber der Längsmittelachse des Hülsenkörpers die Schmiertaschen über einen größeren Umfangsbereich innenseitig im Lagerabschnitt wirksam sind und eine Benetzung eines Umfangssegments an der Innenseite, das größer als eine Breite der Schmiertaschen ist, ermöglicht wird.

Beispielsweise können gemäß Anspruch 6 die Schmiertaschen an der Stützfläche durch die Profiltäler des wirklichen Rauhigkeitsprofils der Stützfläche gebildet sein, sodass in entsprechend aufgerauten oder geglätteten Bereichen der Stützfläche der mit der Lenksäule auszubildende Reibungskoeffizient erhöht oder verringert werden kann.

Durch eine Verteilung der Schmiertaschen um die Umfangskontur gemäß Anspruch 7 kann der Lagerabschnitt an der Innenseite bzw. die Lenkspindel an der Außenoberfläche beim Aufschieben großflächig, insbesondere vollumfänglich, mit Schmierstoff benetzt werden, wodurch der Aufschiebe- bzw. Montagevorgang der Blockierhülse verbessert wird.

Von Vorteil ist auch die Weiterbildung nach Anspruch 8, da durch die durchgängige Trennfuge unterschiedlichste und flexible Aufbauten des Hülsenkörpers aus einem oder mehreren Fügeteilen ermöglicht werden. Das Verbindungselement ist vorzugsweise durch eine Schweißnaht, wie Laser- oder Plasmaschweißnaht, insbesondere ohne Zusatzwerkstoff, gebildet.

Die Aufgabe der Erfindung wird auch durch die Merkmale im Anspruch 9 gelöst. Von Vorteil ist hierbei, dass an der Lenkungsanlage eine effektive Überlastsicherung für die Lenkspindel und das Lenkschloss geschaffen wird, deren Aufbau und Montage durch die Blockierhülse mit den vorstehend beschriebenen Vorteilen vereinfacht wird.

Die Erfindung wird im nachfolgenden anhand der in den Zeichnungen schematisch dargestellten Ausführungsbeispiele näher erläutert.

Es zeigen:
- Fig. 1: eine erfindungsgemäße Blockierhülse in perspektivischer Schrägansicht;
- Fig. 2: die Blockierhülse nach Fig. 1, geschnitten gemäß den Linien II-II;
- Fig. 3: die Blockierhülse nach Fig. 1 im Längsschnitt;
- Fig. 4: eine weitere Ausführungsvariante einer erfindungsgemäße Blockierhülse in perspektivischer Schrägansicht;
- Fig. 5: die Blockierhülse nach Fig. 4 im Längsschnitt;
- Fig. 6: die Blockierhülse nach Fig. 4 im Querschnitt;
- Fig. 7: eine weitere Ausführungsvariante der an einer Lenkspindel befestigten Blockierhülse im Längsschnitt;
- Fig. 8: eine weitere Ausführungsvariante der an der Lenkspindel befestigten Blockierhülse im Längsschnitt;
- Fig. 9: eine weitere Ausführungsvariante einer an einer Lenkspindel befestigten Blockierhülse im Querschnitt und Halbschnittdarstellung um eine waagrechte Symmetrieachse;
- Fig. 10: die Blockierhülse nach Fig. 9 im Längsschnitt;
- Fig. 11: eine mögliche Ausführungsvariante einer Lenkspindel mit auf dieser befestigten Blockierhülse im Längsschnitt;
- Fig. 12: eine weitere Ausführungsvariante einer Blockierhülse in perspektivischer Schrägansicht;
- Fig. 13: die Blockierhülse nach Fig. 12 in Vorderansicht gemäß Pfeil XIII in Fig. 12;
- Fig. 14: eine weitere Ausführungsvariante einer Blockierhülse in perspektivischer Schrägansicht;
- Fig. 15: eine weitere Ausführungsvariante einer Blockierhülse in perspektivischer Schrägansicht;
- Fig. 16: die an einer Lenkspindel angeordnete Blockierhülse nach Fig. 15 und ein Sperrglied der Lenkungsanlage im Längsschnitt;
- Fig. 17: eine erste Ausführungsvariante einer Anordnung von im Lagerabschnitt angebrachten Schmiertaschen einer teilweise dargestellten Blockierhülse;
- Fig. 18: eine zweite Ausführungsvariante einer Anordnung von im Lagerabschnitt angebrachten Schmiertaschen einer teilweise dargestellten Blockierhülse;
- Fig. 19: eine dritte Ausführungsvariante einer Anordnung von im Lagerabschnitt angebrachten Schmiertaschen einer teilweise dargestellten Blockierhülse;
- Fig. 20: eine vierte Ausführungsvariante einer Anordnung von im Lagerabschnitt angebrachten Schmiertaschen einer teilweise dargestellten Blockierhülse;
- Fig. 21: eine fünfte Ausführungsvariante einer Anordnung von im Lagerabschnitt angebrachten Schmiertaschen einer teilweise dargestellten Blockierhülse;
- Fig. 22: eine Ausführungsvariante einer Anordnung einer im Lagerabschnitt angebrachten, an sich bekannten gleitfähigen Struktur einer teilweise dargestellten Blockierhülse;
- Fig. 23: die Blockierhülse mit der an sich bekannten gleitfähigen Struktur geschnitten nach der Linie XXIII-XXIII in Fig. 22;
- Fig. 24 bis 27: jeweils ein Verfahrenschritt eines möglichen Verfahrensablaufs zur Herstellung einer Blockierhülse;
- Fig. 25a bis 25d: jeweils ein Verfahrenschritt eines möglichen Verfahrensablaufs zur Herstellung von Rastausnehmungen bzw. Schmiertaschen an einem Zuschritt;
- Fig. 26a und 26b: jeweils ein Verfahrenschritt eines möglichen Verfahrensablaufs zur Herstellung eines Hohlprofiles aus einem platinenartigen Zuschnitt;
- Fig. 28 bis 31: jeweils ein Verfahrensschritt einer zweiten Möglichkeit eines Verfahrensablaufs zur Herstellung einer weiteren Ausführungsvariante einer Blockierhülse;
- Fig. 29a bis 29c: jeweils ein Verfahrenschritt eines möglichen Verfahrensablaufs zur Herstellung von Rastausnehmungen in einem Zuschnitt;
- Fig. 32 bis 34: jeweils einen Verfahrensschritt einer dritten Möglichkeit eines Verfahrensablaufs zur Herstellung einer weiteren Ausführungsvariante einer Blockierhülse;
- Fig. 35 bis 38: jeweils einen Verfahrensschritt einer vierten Möglichkeit eines Verfahrensablaufs zur Herstellung einer weiteren Ausführungsvariante einer Blockierhülse.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

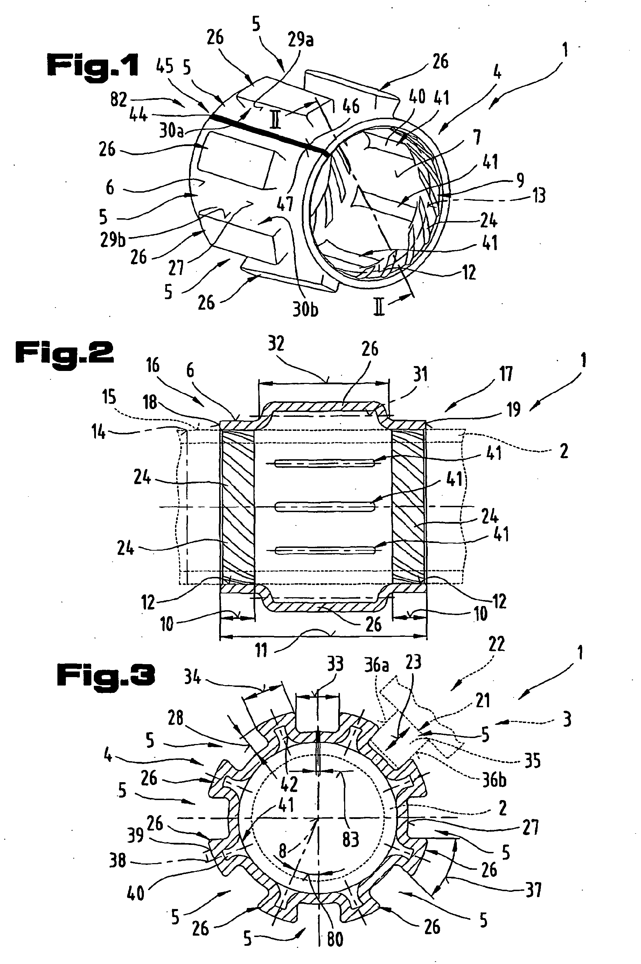

In den Fig. 1 bis 3 ist eine mögliche Ausführungsvariante einer Blockierhülse 1 für eine Lenkspindel 2 einer Lenkungsanlage 3 eines Kraftfahrzeugs bzw. eines an einer Aufstandsfläche über Räder zu bewegenden Fahrzeugs darstellt. Ein Hülsenkörper 4 der Blockierhülse 1 weist mehrere Rastausnehmungen 5 auf, die an einer Außenseite 6 des Hülsenkörpers 4 angeordnet sind.

Die Blockierhülse 1 bzw. der Hülsenkörper 4 ist im gefertigten Zustand im Querschnitt hohlprofilartig ausgebildet, wobei an einer Innenseite 7 des Hülsenkörpers 4 sich entlang einer Längsmittelachse 8 eine Durchgangsöffnung 9 erstreckt. Die Durchgangsöffnung 9 wird in zumindest einem Lagerabschnitt 10, der sich zumindest über einen Teil einer Hülsenlänge 11 erstreckt, von einer Stützfläche 12 begrenzt. Eine Umfangskontur 13 der Stützfläche 12 ist entsprechend einer Umfangskontur 14 an einer Außenoberfläche 15 der Lenkspindel 2 gebildet, wobei die Umfangskonturen 13, 14 vorzugsweise kreisförmig verlaufen. Der Lagerabschnitt 10 bildet somit vorzugsweise einen ringförmigen und zylindrischen Bereich des Hülsenkörpers 4 aus. Es ist jedoch auch eine mehreckige, insbesondere rechteckige, Ausgestaltung des hohlprofilartigen Querschnitts der Blockierhülse 1 möglich, wobei der Lagerabschnitt 10 mit der Stützfläche 12 einer beliebigen Konturform, insbesondere einer Kontur eines Außenumfangs der Lenkspindel 2, entsprechen kann und/oder im Teilabschnitt der Hülsenlänge 11 außerhalb der Lagerabschnitte 10 die Blockierhülse 1 unabhängig von der Querschnittsform in den Lagerabschnitten 10 oder dieser entsprechend als eckiger, z.B. quadratischer oder dreieckiger, Hohlquerschnitt gebildet sein kann.

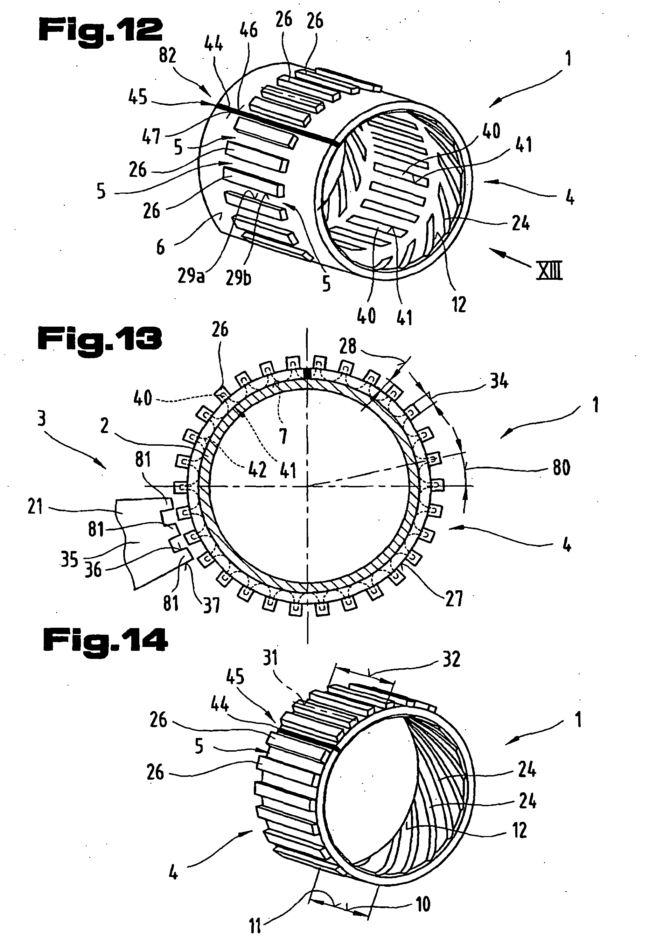

Im in Fig. 1 bis 3 gezeigten Ausführungsbeispiel weist der Hülsenkörper 4 zwei Lagerabschnitte 10 auf, die jeweils an stimseitigen, voneinander abgewandten Endbereichen 16, 17 des Hülsenkörpers 4 ausgebildet sind. Die beiden Lagerabschnitte 10 verlaufen dabei jeweils von Stirnkanten 18, 19 in den Endbereichen 16, 17 über eine Auflagebreite 20 in Richtung des gegenüberliegenden Endbereiches 16; 17 des Hülsenkörpers 4. Beispielsweise verlaufen die Lagerabschnitte 10 über 5 % bis 50 %, insbesondere 10 bis 30%, der Hülsenlänge 11, wobei es auch möglich ist das die Lagerabschnitte 10 über die gesamte Hülsenlänge 11 ausgebildet sind (siehe Fig. 14).

Wie in Fig. 2 in strichlierten Linien dargestellt, wird die Durchgangsöffnung 9 des Hülsenkörpers 4 in auf der Lenkspindel 2 befestigter Position von dieser durchragt, wobei die Lagerabschnitte 10 des Hülsenkörpers 4 mit deren innenliegender Stützfläche 12 an der Außenoberfläche 15 der Lenkspindel 2 unter Wirkung eines Anpressdrucks anliegen und die Stützflächen 12 mit der Außenoberfläche 15 eine reibschlüssige Verbindung über die Auflagebreite 20 ausbilden.

Die Rastausnehmungen 5 an der Außenseite 6 des Hülsenkörpers 4 sind mit einem Sperrglied 21 der Lenkungsanlage 3 in Eingriff bringbar, wobei das Sperrglied 21 in eine Freigabe- oder Sperrstellung überführbar ist. Das Sperrglied 21 ist Bestandteil eines Lenkschlosses 22 der Lenkungsanlage 3, wobei das Sperrglied 21 gemäß dem dargestellten Doppelpfeil 23 verstellbar im Längsschloss 22 gelagert ist und eine Freigabestellung, bei der das Sperrglied 21 außer Eingriff mit den Rastausnehmungen 5 ist oder eine Sperrstellung, bei der das Sperrglied 21 in zumindest einer der Rastausnehmungen 5 eingreift, über das Lenkschloss 22 festgelegt wird. Auf den Aufbau des Lenkschlosses 22 wird an dieser Stelle nicht näher eingegangen, da der Aufbau und die Funktionsweise derartiger Sperr- bzw. Arretiervorrichtungen für Kraftfahrzeugslenkungsanlagen bereits aus dem Stand der Technik bekannt sind.

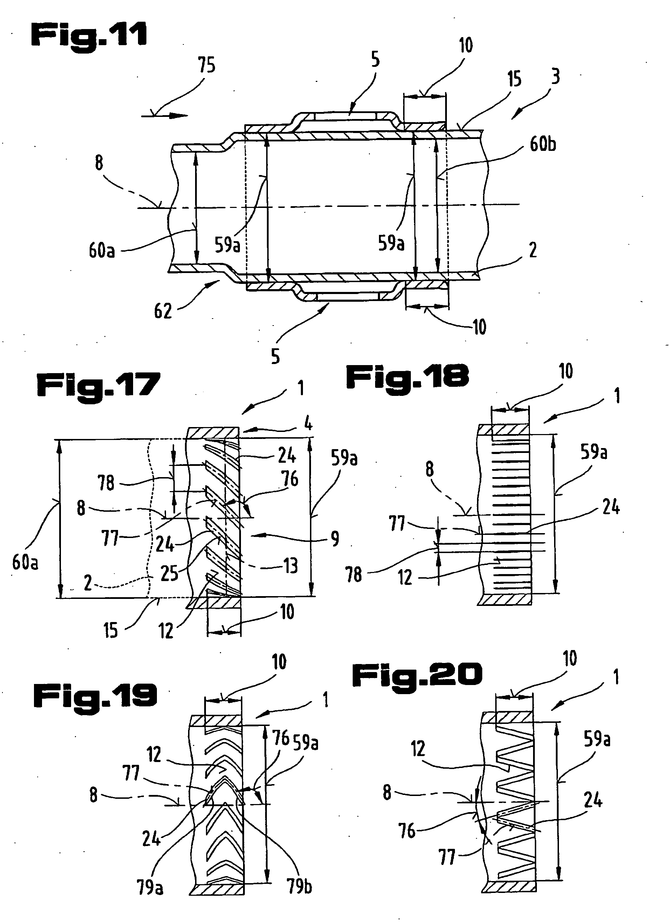

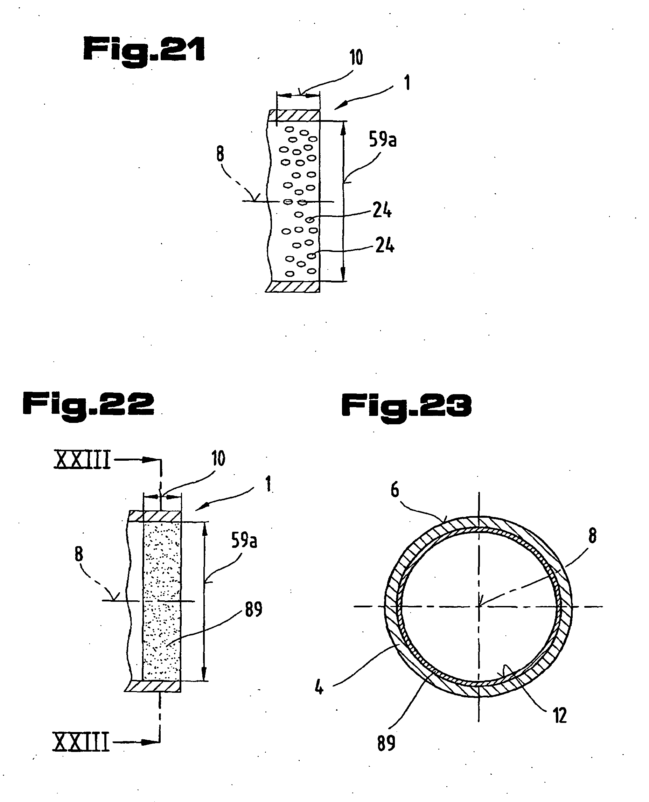

Es sind nun die Stützflächen 12 in den Lagerabschnitten 10 mit vorzugsweise mehreren Schmiertaschen 24 versehen, die in den Stützflächen 12 vertieft angeordnet sind und die zur Aufnahme eines Schmierstoffes geeignet sind oder es ist die Stützfläche 12 an oder zwischen einer gleitfähigen Struktur (siehe Fig. 22 uns 23) an der Innenseite 7 des Hülsenkörpers 4 im Lagerabschnitt 10 ausgebildet. Jene innenseitig am Lagerabschnitt 10 liegende Bereiche, in denen die Schmiertaschen 24 angeordnet sind, weisen eine gegenüber der Stützfläche 12 in Richtung der Außenseite 6 versetzte Begrenzungsfläche 25 auf, die jeweils eine Schmiertasche 24 umschließen. Insbesondere sind die Begrenzungsflächen 25 bei ringförmigen bzw. zylindrischen Lagerabschnitten 10 gegenüber der Stützfläche 12 in radialer Richtung zur Längsmittelachse 8 nach außen versetzt. Unterschiedliche Ausführungsvarianten von Lagerabschnitten 10 mit Schmiertaschen 24 bzw. der gleitfähigen Struktur werden an späterer Stelle im Zuge der Fig. 17 bis 23 näher beschrieben.

Die Rastausnehmungen 5 der in Fig. 1 bis 3 dargestellten Ausführungsvariante einer Blockierhülse 1 sind jeweils zwischen zwei benachbarten, an der Außenseite 6 des Hülsenkörpers 4 vorgesehenen Auskragungen 26 angeordnet. Zu den Rastausnehmungen 5 sei im Allgemeinen angemerkt, dass diese einen Teil einer profilierten bzw. strukturierten Oberfläche 27 an der Außenseite 6 des Hülsenkörpers 4 ausbilden. Die Auskragungen 26 sind gegenüber den zu diesen umliegenden, ebenen Bereichen an der Oberfläche 27 an der Außenseite 6 des Hülsenkörpers 4 vorspringend bzw. erhaben ausgebildet. Bei einem zylindrisch bzw. ringförmig ausgebildeten Hülsenkörper 4 springen die Auskragungen 26 im Wesentlichen radial auf dessen Längsmittelachse 8 über eine Höhe 28, die beispielsweise 3 bis 5 mm, insbesondere ca. 4,5mm beträgt, gegenüber der restlichen, äußeren Oberfläche 27 vor.

Jeweils eine Rastausnehmung 5 ist somit zwischen zwei benachbarten Auskragungen 26 ausgebildet, wobei die Rastausnehmungen 5 von sich gegenüberliegenden Anschlagflächen 29a, 29b zweier Auskragungen 26 begrenzt werden, die jeweils an Längsseitenbereichen 30a, 30b der Auskragungen 26 angeordnet sind. Die Auskragungen 26 erstrecken sich in Längsrichtung entlang einer parallel zur Längsmittelachse 8 des Hülsenkörpers 4 verlaufenden Erstreckungsachse 31 über eine Länge 32. Eine Rastbreite 33 der Rastausnehmung 5, die zwischen den sich gegenüberliegenden Anschlagflächen 29a, 29b verläuft, wird bestimmt durch eine Breite 34 der Auskragungen 26 sowie der Anzahl der über den Umfang an der Außenseite 6 des Hülsenkörpers 4 angeordneten Auskragungen 26. Die Rastbreite 33 ist dabei so bemessen, dass das Sperrglied 21, insbesondere ein Sperrbolzen 35, in die Rastausnehmung 5 hineinragen kann und vorzugsweise spielfrei oder mit geringer Toleranz formschlüssig durch die Anschlagflächen 29a, 29b begrenzt wird, falls sich das Sperrglied 21 des Lenkschlosses 22 in Sperrstellung befindet. Der Sperrbolzen 35 weist hierzu insbesondere parallel zueinander liegende Arretierflächen 36a, 36b auf, die in dessen Sperrstellung an den Anschlagflächen 29a, 29b anliegen.

Die Auskragungen 26 weisen eine trapezförmige Querschnittsform bzw. Umfangskonturen auf, wobei die Anschlagflächen 29a, 29b an je einer Auskragung 26 hierzu in einem Winkel 37 zueinander stehen, der vorzugsweise spitz in Richtung der Innenseite 7 des Hülsenkörpers 4 zusammenläuft. Eine Radialachse 38, entlang der sich die Auskragungen über die Höhe 28 erstrecken, ist normal auf die Längsmittelachse 8 des Hülsenkörpers 4 gerichtet. Die Auskragungen 26 weisen je eine Deckfläche 39 auf, die normal bzw. schräg auf die Radialachse 38 steht und um die Höhe 28 von der umliegenden Oberfläche 27 distanziert ist, wobei sich die Anschlagflächen 29a, 29b der Auskragungen 26 von der Deckfläche 39 in Richtung der Radialachse 38 hin zur Durchgangsöffnung 9 entsprechend dem Winkel 37 zueinander verjüngend erstrecken. Die Anschlagflächen 29a, 29b an einer Auskragung 26 verlaufen in einem derartigen Winkel 37 zueinander, dass die über die Rastbreite 33 voneinander distanzierten und sich gegenüberliegenden Anschlagflächen 29a, 29b zweier benachbarter Auskragungen 26 parallel zueinander verlaufen. Eine derartige parallele Anordnung der Anschlagflächen 29a, 29b ermöglicht in vorteilhafter Weise die Verwendung von Sperrbolzen 35 mit parallelen Arretierflächen 36a, 36b, wie diese im Stand der Technik verwendet werden.

Es sei angemerkt, dass die Auskragungen 26 auch weitere Querschnittsformen aufweisen können, beispielsweise können die Anschlagflächen 29a, 29b an einer Auskragung 26 parallel oder in einem Winkel 37, der sich hin zur Innenseite 7 des Hülsenkörpers 4 stumpf erweitert, verlaufen, wodurch die Auskragungen 26 rechteckige oder beliebige kegelstumpfartige Querschnittsformen aufweisen können.

Die Rastausnehmung 5 ist im Querschnitt bei trapezförmigen Auskragungen 26 U-förmig bzw. wannenförmig ausgebildet, wobei wie vorstehend angemerkt diese auch eine kegelstumpf- bzw. trapezartige oder rechteckige Querschnittsform aufweisen kann. Es muss lediglich sichergestellt sein, dass das Sperrglied mit seinen Arretierflächen 36a, 36b spielfrei bzw. nahezu spielfrei an den Anschlagflächen 29a, 29b zur Anlage gebracht werden kann.

Die Hülsenlänge 11 setzt sich somit aus den sich über die Länge 32 erstreckenden Auskragungen 26 und den zumindest einen Teil der restlichen Hülsenlänge 11 einnehmenden Lagerabschnitten 10 mit den Stützflächen 12 zusammen. Wie ausführungsgemäß dargestellt, ist innerhalb der Auskragungen 26 jeweils ein Hohlraum 40 angeordnet, der sich in Form einer Vertiefung 41 von der Innenseite 7 des Hohlkörpers 4 in Richtung dessen Außenseite 6 erstreckt, wobei die Vertiefung 41 an der Innenseite 7 nutartig bzw. wannenartig mit einer Innenfläche 42 verläuft. Eine innere Kontur der Vertiefung 41 an der Innenfläche 42 und die äußere Kontur der Auskragung 26 sind dabei bevorzugt gleichförmig ausgebildet, wobei die Auskragungen 26 beispielsweise die Form eines U- oder C-Profiles oder dergleichen aufweisen. Die Auskragungen 26 können somit einen Trapezhohlprofilquerschnitt aufweisen. Eine Wandstärke 43 des Hülsenkörpers 4 kann im Bereich der den Hohlraum 40 aufweisenden Auskragungen 26 und am restlichen Hülsenkörper 4 eine einheitliche Dimension aufweisen. Die Wandstärke 43 des Hülsenkörpers 4 beträgt beispielsweise zwischen 0,3 und 5 mm, insbesondere 0,5 bis 3 mm, bevorzugt 1 bis 2mm. In Abhängigkeit eines verwendeten Herstellungsverfahrens der hohlen Auskragungen 26 kann deren Wandstärke 43 gegenüber dem restlichen Hülsenkörper 4 insbesondere aufgrund von Materialstreckung geringer sein, beispielsweise kann die Wandstärke 43 der Auskragungen 26 zwischen 1/4 und 3/4, insbesondere zwischen 1/3 und 2/3 oder ca. im Bereich der Hälfte der Wandstärke 43 des restlichen Hülsenkörpers 4 liegen.

Der Hülsenkörper 4 ist vorzugsweise aus einem einheitlichen Material, insbesondere aus Stahl, Aluminiurn oder aus einer geeigneten metallischen Legierung gebildet. Es ist möglich, dass der Hülsenkörper 4 durch ein z.B. mittels Druckumformen, insbesondere Strangpressen, hergestelltes, fugenloses Rohrprofil gebildet ist, in das die entsprechenden Rastausnehmungen 5 angebracht werden. Vorzugsweise ist der Hülsenkörper 4 jedoch aus einem umgeformten, platinenartigen Zuschnitt gebildet, der in eine hohlprofilartige Form gebracht wird und mittels einem Verbindungselement 44, das in einer Trennfuge 45 zwischen zwei Längsseitenkanten 46 und 47 angebracht wird, zu einem geschlossenen Hohlprofil verbunden wird, wie dies an späterer Stelle näher beschrieben wird.

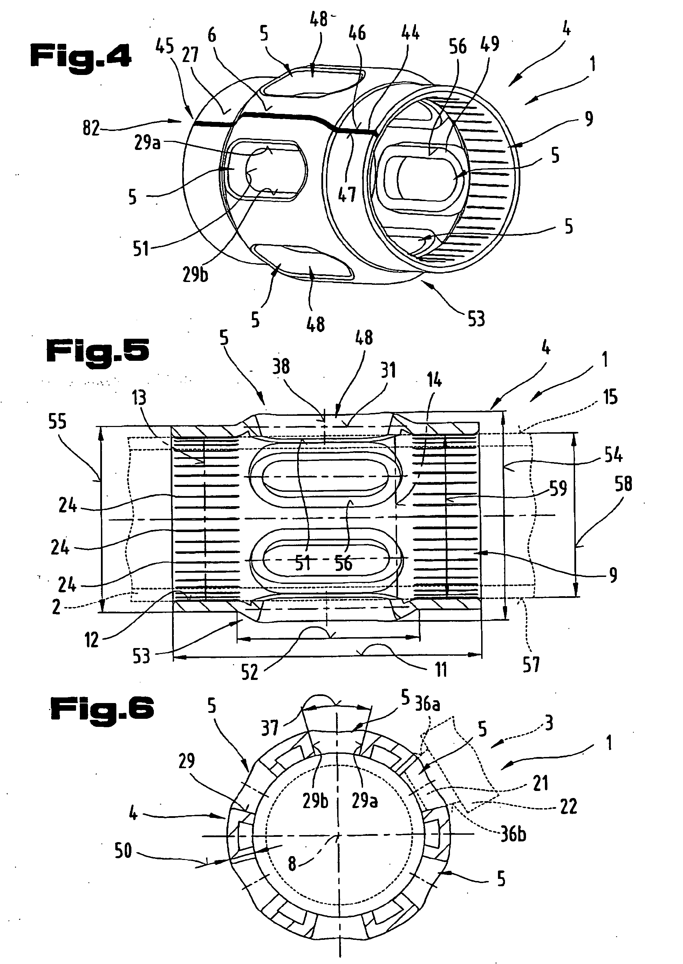

In den Fig. 4 bis 6 ist eine weitere Ausführungsvariante einer Blockierhülse 1 für eine Lenkspindel 2 einer Lenkungsanlage 3 dargestellt. Der Hülsenkörper 4 weist wiederum Rastausnehmungen 5 an dessen Außenseite 6 auf, wobei die Rastausnehmungen 5 durch die geschlossene Anschlagfläche 29 begrenzt werden.

Die Rastausnehmungen 5 weisen gemäß dem gezeigten Ausführungsbeispiel Ausschnitte 48 auf, die einen in der Durchgangsöffnung 9 liegenden Innenraum des Hülsenkörpers 4 nach außen hin freigeben. Die Ausschnitte 48 sind als über die gesamte Wandstärke 43 des Hülsenkörpers 4 verlaufende Materialdurchbrüche, die beispielsweise langlochartig rechteckiger oder ovaler Form entlang der Erstreckungsachse 31 längsverlaufen, gebildet.

Wie dargestellt, sind die Rastausnehmungen 5 durch Umlaufstege 49 umschlossen, die sich über ein Ausmaß 50 in radialer bzw. schräger Richtung auf die Längsmittelachse 8 entlang der Radialachse 38 des Hohlkörpers 4 hin zum Innenraum des Hülsenkörpers 4 erstrecken. Eine den Ausschnitt 48 begrenzende Umfangskante 51 ist vorzugsweise über deren Umfang geschlossen und insbesondere oval, ringförmig, rechteckförmig oder dgl. ausgebildet, sodass die Rastausnehmung 5 längsschlitzartig im Hülsenkörper 4 verläuft.

Der hohlprofilartige Hülsenkörper 4 weist über einen Teilabschnitt 52 der Hülsenlänge 11 eine bevorzugt vollumfängliche Aufweitung 53 bzw. Ausbauchung auf. Bei einem zylindrischen Hülsenkörper 4 ist ein Durchmesser 54 der Aufweitung 53 größer gegenüber einem Durchmesser 55 an den außerhalb des Teilabschnitts 52 liegenden Bereichen, wobei bei nicht-zylindrischer Aufweitung 53 die Linearabmaße dementsprechend ausgebildet sind. Die gegenüber der Aufweitung 53 radial zur Längsmittelachse 8 zurückgesetzten Bereiche sind zumindest teilweise durch die Lagerabschnitte 10 gebildet, die am Hülsenkörper 4 innenseitig die Stützflächen 12 zur reibschlüssigen Aufnahme der Lenkspindel 2 aufweisen. Die Ausschnitte 48 sind im Teilabschnitt 52 in einer um den Umfang des Hülsenkörpers 4 verlaufenden Reihe angeordnet, wobei die Erstreckungsachse 31, entlang derer sich die langlochartigen Rastausnehmungen 5 erstrecken, bevorzugt parallel zur Längsmittelachse 8 des Hülsenkörpers 4 verlaufen.

Am Hülsenkörper 4 innenseitig liegende Stirnflächen 56 der Umlaufstege 49 sind vorzugsweise derartig ausgebildet, dass sich die durch die Durchgangsöffnung 9 verlaufende Lenkspindel 2 an diesen abstützt oder ein geringfügiger Spalt zwischen der Außenoberfläche 15 der Lenkspindel 2 und den Stirnflächen 56 ausgebildet wird. Die Stirnflächen 56 werden daher bevorzugt durch einen Hüllkörper 57, insbesondere eines Hüllzylinder, begrenzt, der die Umfangskontur 14 der Lenkspindel 2 im Bereich der Aufweitung 53 aufweist. Die Stirnflächen 56 sind somit jeweils entlang des Umfangs des Hüllkörpers 57 verlaufend ausgebildet. Von Vorteil ist nun eine Ausgestaltung, bei der Hüllkörperdurchmesser 58 dem Innendurchmesser 59 im Bereich der Lagerabschnitte 10 entspricht oder geringfügig größer ist als der Innendurchmesser 59, sodass eine durch die Durchgangsöffnung 9 ragende Lenkspindel 2 im Teilabschnitt 52 an deren Außenoberfläche 15 durch die Stirnflächen 56 gestützt wird. Die der Außenoberfläche 15 der Lenkspindel 2 zugewandten Stirnflächen 56 können somit einen Ausschlag bzw. ein Auslenken der Lenkspindel 2 aus einer zur Längsmittelachse 8 parallelen Normalposition begrenzen.

In die längsschlitzartigen Rastausnehmungen 5 kann in auf der Lenkspindel 2 montiertem Zustand der Blockierhülse 1 wiederum ein Sperrglied 21 eines Lenkschlosses 22 eingreifen, wobei somit eine Positionierung der Lenkspindel 2 gegenüber Verdrehung derselben erfolgt. Hierzu können Arretierflächen 36a, 36b an dem als Sperrbolzen 35 gebildeten Sperrglied 21 zumindest über Teilbereiche an der Anschlagfläche 29 flächig anliegen, oder nur mit der Umfangskante 51 des Ausschnitts 48 über einen Teilumfang oder vollumfänglich in Kontakt stehen. Sich gegenüberliegende Anschlagflächen 29a, 29b der schlitzförmigen Rastausnehmungen 5 können, wie dargestellt, beispielsweise in Richtung des Innenraums des Hülsenkörpers 4 entsprechend dem Winkel 37 spitz- oder stumpfwinkelig zueinander verlaufend bzw. verjüngend angeordnet sein oder parallel zueinander verlaufen.

Im Allgemeinen wird durch Ausformen von Umlaufstegen 49 die Anschlagfläche 29a, 29b gegenüber der sich ansonsten lediglich über die Wandstärke 43 erstreckenden Fläche vergrößert, sodass die Flächenpressung zwischen dieser und den Arretierflächen 36a, 36b des Sperrbolzens verringert werden kann und eine Versteifung der schlitzartigen Rastausnehmung 5 erreicht wird. Zweckmäßigerweise werden die Umlaufstege 49 durch Umformen der um die Ausschnitte 48 liegenden Bereiche ausgeformt, wobei dies spanlos durch aufweiten bzw. stauchen dieser Bereiche in Richtung des Innenraums des Hülsenkörpers 4 erfolgt.

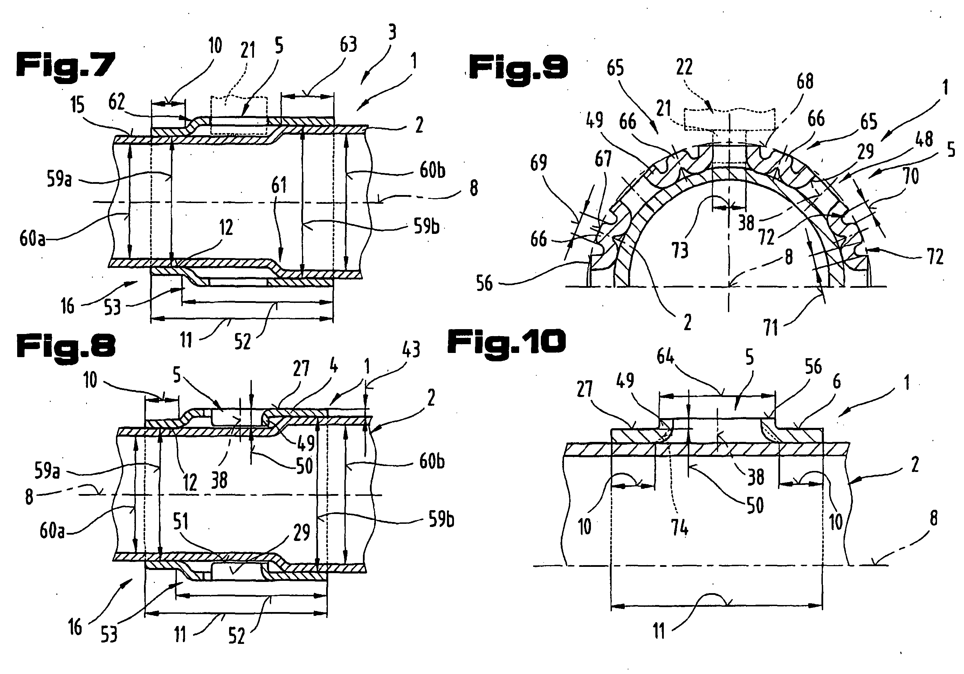

In der Fig. 7 ist ein weiteres Ausführungsbeispiel einer Lenkungsanlage 3 bzw. einer Lenkspindel 2 angeordneten Blockierhülse 1 dargestellt. Über die Hülsenlänge 11 des Hülsenkörpers 4 ist dabei nur ein Lagerabschnitt 10 ausgebildet, dessen innenliegende Stützfläche 12 mit der Außenoberfläche 15 der Lenkspindel 2 eine reibschlüssige Verbindung eingeht. Der Lagerabschnitt 10 ist dabei an einem ersten Endbereich 16 der beiden voneinander abgewandten Endbereiche 16, 17 des Hülsenkörpers 4 angeordnet, wobei dieser Lagerabschnitt 10 mit einer Klemmspannung an der Lenkspindel 2 angebracht ist. Der weitere Endbereich 17 ist vorzugsweise frei von inneren, aus einer Materialverformung resultierenden Spannungen an einem weiteren Bereich der Außenoberfläche 15 der Lenkspindel 2 anliegend oder mit einem geringfügigen Spalt von dieser distanziert angeordnet.

Die Lenkspindel 2 weist im dargestellten Ausführungsbeispiel einen ersten Spindeldurchmesser 60a und einen weiteren Spindeldurchmesser 60b auf, wobei der größere Spindeldurchmesser 60b durch einen Absatz 61 auf den geringen Spindeldurchmesser 60a radial in Richtung der Längsmittelachse 8 verjüngt wird. Der Hülsenkörper 4 liegt im Lagerabschnitt 10 mit dem Innendurchmesser 59a an der Lenkspindel 2 im Bereich des ersten, geringeren Durchmessers 60a mit der Klemmspannung an, und es erstreckt sich der restliche Hülsenkörper 4 in Richtung der Längsmittelachse 8 über den Absatz 61 der Lenkspindel 2 hinweg auf den weiteren, größeren Spindeldurchmesser 60b über einen Überlappungsbereich 63. Die Befestigung der Blockierhülse 1 an der Lenkspindel 2 erfolgt dabei bevorzugt ausschließlich über den Lagerabschnitt 10. In der gegenüber dem Innendurchmesser 59a im Lagerabschnitt 10 über einen Absatz 62 ausgebildeten, über den Teilabschnitt 52 verlaufenden Aufweitung 53 am Hülsenkörper 4 sind die Rastausnehmungen 5 angebracht. Der hohlprofilartige Hülsenkörper 4 verläuft über den Teilabschnitt 52 im Wesentlichen zylindrisch, wobei auch mehreckige Querschnittsformen des Hülsenkörpers 4 im Teilabschnitt 52 möglich sind. Im Allgemeinen sind der bzw. die Lagerabschnitte 10 gegenüber dem restlichen Teilabschnitt 52 mit der Aufweitung 53 als umlaufende, ringartige Bünde ausgebildet.

Mit einer in Fig. 7 dargestellten Lenkungsanlage 3 ist das Überbrücken eines Absatzes 61 einer Lenkspindel 2 möglich, wobei sich der Hülsenkörper 4 im Überlappungsbereich 63 an der Lenkspindel 2 zu dessen Stabilisierung abstützen kann. Die Blockierhülse 1 kann dabei zumindest teilweise wie in den Fig. 1 bis 6 beschrieben ausgebildet sein.

In der Fig. 8 ist eine weitere Ausführungsvariante einer Blockierhülse 1 dargestellt, die an einer Lenkspindel 2 befestigt ist. Der Hülsenkörper 4 weist wiederum einen Lagerabschnitt 10 im ersten Endbereich 16 auf, der über die Stützfläche 12 reibschlüssig an der Außenoberfläche 15 der Lenkspindel 2 anliegt, wobei im Lagerabschnitt 10 Hülsenkörper 4 eine innere Spannung bzw. Klemmspannung vorherrscht. Der Hülsenkörper 4 weist die gegenüber dem bundartigen Lagerabschnitt 10 mit dem inneren Durchmesser 59a radial erweiterte Aufweitung 53 auf, die über den Teilabschnitt 52 in Richtung der Längsmittelachse 8 verläuft. Im Bereich dieser Aufweitung 53 sind nun wiederum mehrere Rastausnehmungen 5 angeordnet, die in Form von schlitzartigen Materialdurchbrüchen über die Wandstärke 43 des Hülsenkörpers 4 realisiert sind. Von der äußeren Oberfläche 27 erstreckt sich jeweils ein Umlaufsteg 49 über das Ausmaß 50 in radialer Richtung entlang der Radialachse 38 hin zum Innenraum des Hülsenkörpers 4. Die dem Innenraum des Hülsenkörpers 4 zugewandte Umfangskante 51 und die Anschlagfläche 29 des Umlaufstegs 49 weisen dabei eine offene Kontur auf. Der Umlaufsteg 49 umschließt somit nur einen Teilbereich der schlitzartigen Rastausnehmung 5.

In den Fig. 9 und 10 ist eine weitere Ausführungsvariante einer Blockierhülse 1 dargestellt, die an einer Lenkspindel 2 angebracht ist. Die Rastausnehmungen 5 sind wiederum durch Ausschnitte 48 gebildet, die von jeweils einem Umlaufsteg 49 umschlossen sind. Die Umfangskante 51 bzw. Anschlagfläche 29, die den Ausschnitt 48 begrenzen, weisen eine geschlossene Kontur auf.

Die Umlaufstege 49 erstrecken sich in von Innenraum bzw. der Durchgangsöffnung 9 des Hülsenkörpers 4 abgewandter Richtung im Wesentlichen parallel zum Verlauf auf die normal zur Längsmittelachse 8 verlaufende Radialachse 38. Die Stirnfläche 56 sowie die Umfangskante 51 sind somit um das Ausmaß 50 gegenüber der umliegenden Außenoberfläche 27 des Hülsenkörpers 4 distanziert. Die den Ausschnitt 48 begrenzende Anschlagfläche 29 verläuft vorzugsweise parallel zur Radialachse 38. Die restlichen Bereiche am Hülsenkörper 4 außerhalb des Umlaufstegs 49 weisen eine ebenflächige, insbesondere zylindrische, äußere Oberfläche 27 auf.

Außerhalb eines Teilabschnitts 64 der Hülsenlänge 11, in der entlang der Längsmittelachse 8 verlaufend der Umlaufsteg 49 mit der innenliegenden Rastausnehmung 5 angeordnet ist, können die Lagerabschnitte 10, mit der innenliegenden Stützfläche 12 ausgebildet sein.

An über den Umfang des hohlprofilartigen Hülsenkörpers 4 jeweils zwischen zwei benachbarten Umlaufstegen 49 bzw. der Rastausnehmungen 5 liegenden Zwischenbereichen 65 ist jeweils zumindest eine Laufnase 66 angeordnet. Die äußere Scheitelfläche 67 der Laufnase 66 liegt im Wesentlichen auf einem, die Seitenkanten der Stirnflächen 56 der Umlaufstege 49 tangierenden Hüllkreis 68, wobei der Hüllkreis 68 konzentrisch zur Längsmittelachse 8 des Hülsenkörpers 4 verläuft. Eine Nasenbreite 69 ist so bemessen, dass Breiten 70, 71 von neben jeder Laufnase 66 liegenden Zwischenräumen 72, 73 im Zwischenbereich 65 geringer sind, als eine Sperrbolzenbreite 73 des Sperrbolzens 35, die zwischen den Arretierflächen 36a, 36b verläuft. Ein unerwünschtes Einrasten des Sperrbolzens 35 im Zwischenbereich 65 zwischen zwei benachbarten Umlaufstegen 49 kann somit verhindert werden.

Es sei an dieser Stelle angemerkt, dass es selbstverständlich möglich ist, im Zwischenbereich 65 Zwischenräume 71; 72 vorzusehen, deren Breiten 71; 72 zumindest der Sperrbolzenbreite 73 entsprechen, um zusätzliche Rastpositionen am Umfang des Hülsenkörpers 4 zu schaffen. Ebenso ist es möglich, Anordnungen zur Verstärkung der Umlaufstege 49 vorzusehen, wie beispielsweise in strichlierten Linien 44 durch innenseitig an der Anschlagfläche 29 des Umlaufstegs 49 angebrachte Sicken 74 dargestellt.

Ein weiteres, mögliches Ausführungsbeispiel einer Lenkungsanlage 3 mit der Lenkspindel 2 sowie der auf dieser befestigen Blockierhülse 1 ist in Fig. 11 dargestellt. An jedem der beiden Endbereiche 16, 17 der Blockierhülse 1 ist dabei ein Lagerabschnitt 10 ausgebildet, der jeweils mit der Stützfläche 12 an der Außenoberfläche 15 der Lenkspindel 2 eine reibschlüssige Verbindung eingeht. Die Montage der Blockierhülse der Lenkspindel 2 erfolgt dabei durch Aufschieben bzw. Aufziehen dieser gemäß der durch Pfeil 75 dargestellten Richtung. Die Lenkspindel 2 weist einen ersten Bereich mit dem ersten, kleineren Durchmesser 60a, sowie den weiteren Bereich mit dem weiteren, größeren Durchmesser 60b auf, wobei zwischen diesen Bereichen der Absatz 61 ausgebildet ist. Der erste, kleinere Durchmesser 60a der Lenkspindel 2 ist derart bemessen, dass dieser zumindest geringfügig kleiner dem Innendurchmesser 59a der Blockierhülse 1 im Lagerabschnitt 10 ist, sodass die Stützfläche 12 der Blockierhülse 1 mit der Außenoberfläche 15 der Lenkspindel 2 im Bereich mit dem kleineren Durchmesser 60a mit der beim Aufschieben bzw. Aufziehen nicht in direktem Kontakt steht oder ein Gleitkontakt mit geringem Gleitreibungskoeffizienten besteht. Eine reibschlüssige Verbindung zwischen der Blockierhülse 1 und der Lenkspindel 2 wird erst im Bereich der Lenkspindel 2 mit dem größeren Durchmesser 60b ausgebildet. Ein Materialabrieb an der Stützfläche 12 und der Außenoberfläche 15 kann somit über weite Bereiche vermieden oder zumindest gering gehalten werden.

In den Fig. 12 und 13 ist eine weitere Ausführungsvariante der Blockierhülse 1 dargestellt, wobei an der Außenseite 6 des Hülsenkörpers 4 die Rastausnehmungen 5 jeweils zwischen zwei benachbarten Auskragungen 26 angeordnet sind. Die Auskragungen 26 sind dabei in ähnlicher Weise wie in den Fig. 1 bis 3 beschrieben ausgebildet und können insbesondere jeweils den innenliegenden Hohlraum 40 aufweisen.

Im gezeigten Ausführungsbeispiel ist jedoch ein Teilungswinkel 80, um den die nebeneinander liegenden, leistenartigen Auskragungen 26 am Außenumfang bzw. der Oberfläche 27 des Hülsenkörpers 4 voneinander distanziert sind, geringer, sodass eine weitaus größere Anzahl von Auskragungen 26 um den Umfang der Außenseite 6 des Hülsenkörpers 4 angeordnet ist. Gemäß der in Fig. 1 bis 3 dargestellten Ausführungsvariante beträgt der Teilungswinkel 80 45°, in der in Fig. 12 und 13 dargestellten Ausführungsvariante ist dieser kleiner als 45°. Mögliche Teilungswinkel 80 können Werte zwischen 5 und 60°, insbesondere zwischen 10 und 45° einnehmen.

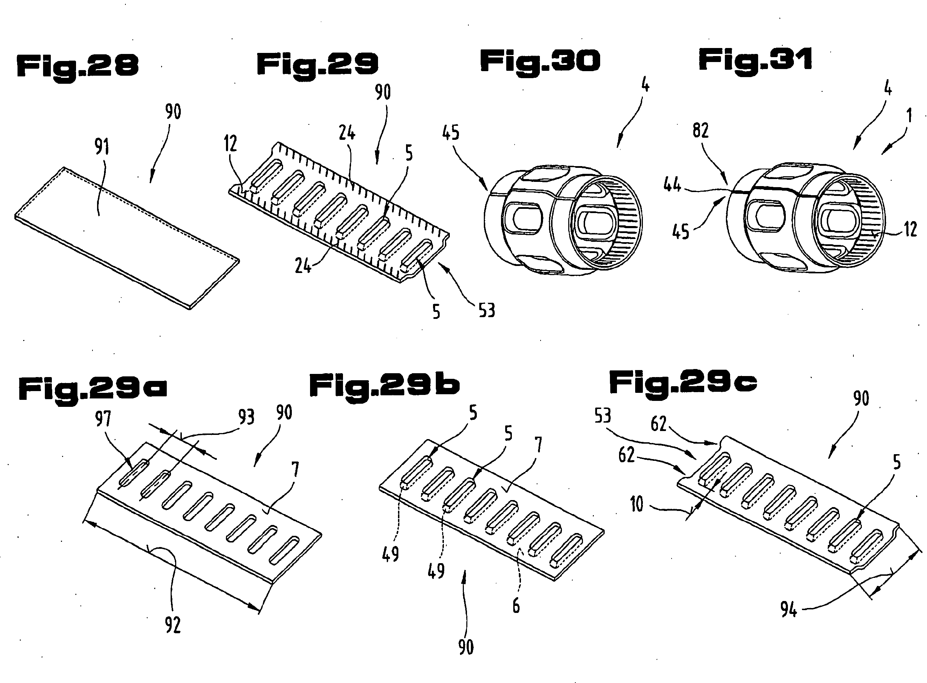

Das als Sperrbolzen 35 ausgebildete Sperrglied 21 des Lenkschlosses 22 der Lenkungsanlage 3 ist in Sperrstellung zum gleichzeitigen Eingriff in mehrere Rastausnehmungen 5 ausgebildet. Hierzu weist der Sperrbolzen 35 mehrere Rastzähne 81 auf, die in Sperrstellung in die Rastausnehmung 5 ragen. Jeder Rastzahn 81 weist zwei Arretierflächen 36a, 36b auf, die mit den jeweiligen die Rastausnehmung 5 begrenzenden Anschlagflächen 29a, 29b in Kontakt treten. Bei der gezeigten Ausführungsvariante ist die hohe Anzahl von Auskragungen 26 und der Eingriff in die Rastausnehmungen 5 durch mehrere Rastzähne 81 von Vorteil, da eine Reduktion der Höhe 28 der Auskragungen 26 und der Aufteilung der Abstützkraft, die proportional zu einem über Lenkspindel 2 übertragenen Drehmoment ist, auf Anschlagflächen 29a, 29b mehrerer Auskragungen ermöglicht wird. Hierzu sind die Auskragungen 26 bzw. die Rastausnehmungen 5 an der Außenseite 6 des Hülsenkörpers 4 beispielsweise in Art eines keilwellenartigen oder kerbzahnartigen Profils ausgebildet. Gegenüber einer Rastprofilierung mit beispielsweise sechs oder acht zwischen den Auskragungen 26 liegenden Rastausnehmungen 5 kann die Höhe 28 der Auskragungen 26 somit auf die Hälfte, insbesondere ein Drittel, bevorzugt ein Viertel reduziert werden. Somit ist bei Sperrstellung des Sperrbolzens 35 nur ein geringer Verdrehwinkel der Lenkspindel 2 zum Einrasten in die Rastausnehmungen 5 notwendig, wodurch der Handhabung- bzw. Bedienkomfort einer Lenkungsanlage 3 verbessert wird. Weiters lässt sich die Herstellung der Auskragungen 26 der Rastprofilierung vereinfachen, wie dies an späterer Stelle im Zuge der Fig. 28 bis 30 beschrieben wird.

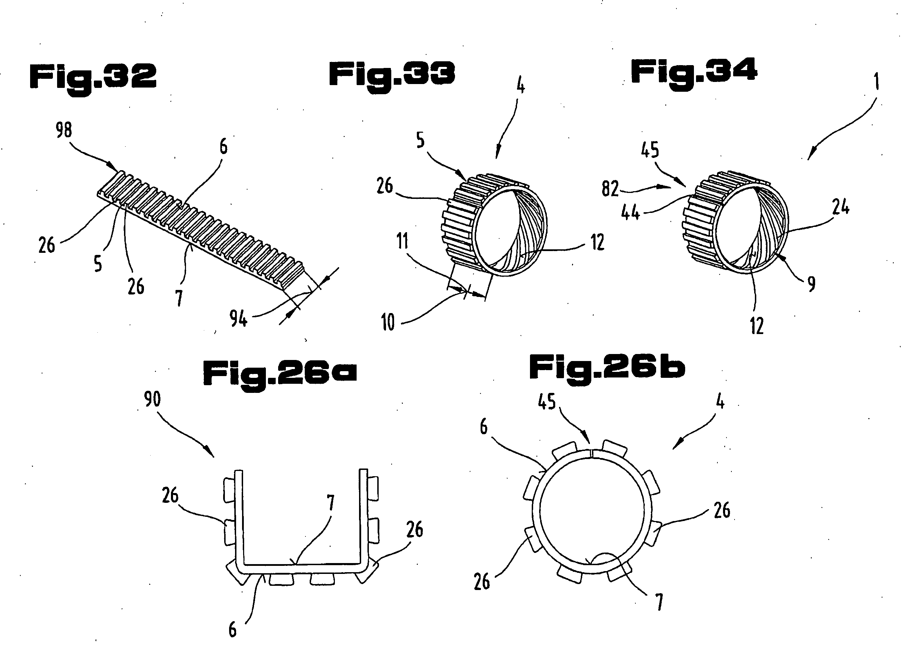

Eine weitere Ausführungsvariante einer Blockierhülse 1 ist in Fig. 14 dargestellt. Die Stützfläche 12 mit den Schmiertaschen 24 bzw. der gleitfähigen Struktur an der Innenseite 7 des Hülsenkörpers 4 verläuft hierbei durchgängig über die gesamte Hülsenlänge 11. Die Auskragungen 26 sind aus Vollmaterial, ohne innenliegende Hohlräume gebildet. Die Auskragungen 26 erstrecken sich leisten- bzw. zahnförmig entlang deren Erstreckungsachse 31 über die Länge 32 an der Außenseite 6 des Hülsenkörpers 4. Die leistenförmigen Auskragungen 26 können außenseitig auf den zylindrischen bzw. ringförmigen Hülsenkörper 4 beispielsweise über ein Verbindungselement befestigt sein, durch Abtrag von Material zur Bildung der Rastausnehmungen 5 gebildet werden, oder in einem Urformprozess einstückig mit dem restlichen Hülsenkörper 4 geformt werden. Vorzugsweise wird der Hülsenkörper 4 aus einem profilierten Zuschnitt bzw. Blechteil gebildet, wobei an der profilierten Oberfläche des Zuschnitts die Auskragungen 26 bzw. Rastausnehmungen 5 ausbildet sind. Die profilierte Oberfläche des Zuschnitts kann z.B. in Art einer Kerbverzahnung gebildet sein. Ein Verfahren zur Herstellung einer Blockierhülse 1 aus einem profilierten Zuschnitt ist im Zuge der Fig. 32 bis 34 detailliert beschrieben.

Durch die in Fig. 14 dargestellte Ausführungsvariante ist es von Vorteil, dass die Auskragungen 26 außenseitig über die gesamte Hülsenlänge 11 des Hülsenkörpers 4 verlaufen können und innenseitig am Hülsenkörper 4 unabhängig von den Auskragungen 26 eine Struktur, insbesondere die Stützfläche 12 mit den Schmiertaschen 24 bzw. der gleitfähigen Struktur, ausgebildet sein kann. Es ist daher möglich, dass der Lagerabschnitt 10 mit der Stützfläche 12 über die gesamte Hülsenlänge 11 ausgebildet ist. Da sich der innenseitige Lagerabschnitt 10 und die außenseitigen Auskragungen 26 mit der Länge 32 über die Hülsenlänge 11 oder zumindest einen Teil derselben überdecken, kann die Hülsenlänge 11 bzw. das Gewicht der Blockierhülse 1 in vorteilhafter Weise reduziert werden.

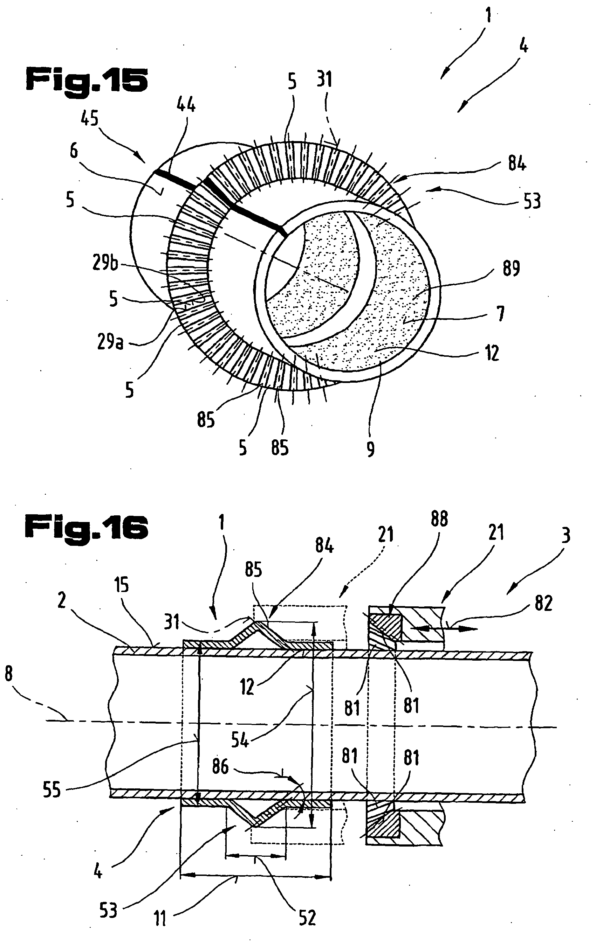

Eine weitere Ausführungsvariante einer Blockierhülse 1 bzw. Lenkungsanlage 3 ist in den Fig. 15 und 16 dargestellt. An der Außenseite 6 des Hülsenkörpers 4 ist ein Zahnkranz 84 vorgesehen, der zwischen Zähnen 85 angeordnete Rastausnehmungen 5 aufweist. Die Rastausnehmungen 5 werden durch die Anschlagflächen 29a, 29b an den Längsseitenbereichen 30a, 30b der Zähne 85 begrenzt. Der Zahnkranz 84 ist in Art eines Kegelrades gebildet und es bilden die Zähne 85 eine vollumfänglich verlaufende, vorzugsweise feine Gerad- oder Schrägverzahnung um den Hülsenkörper 4 aus, sodass ein Zahn- bzw. Rastprofil zum formschlüssigen Zusammenwirken mit dem Sperrglied 21 geschaffen wird. Es ist hierzu am Hülsenkörper 4 wiederum die zu dessen Längsmittelachse 8 radiale Aufweitung 53 ausgebildet, die sich über den Teilabschnitt 52 der Hülsenlänge 11 erstreckt, wobei die Aufweitung 53 zweckmäßigerweise einen Dreiecks- oder Trapezhohlquerschnitt aufweist. An zumindest einer in einem Winkel 86 zur umliegenden Außenseite 6 verlaufenden Flanke der Aufweitung 53 sind durch Vor- und Rücksprünge die Zähne 85 des Zahnkranzes 84 ausgebildet, wobei diese entlang der Erstreckungsachse 31 längsverlaufen. Die Innenseite 7 des Hülsenkörpers 4 kann im Bereich der Aufweitung 53 vertieft gegenüber den Umliegenden Bereichen ausgebildet sein, wobei die Aufweitung 53 bevorzugt spanlos durch Ausbauchen, Ziehen oder Biegen von Material des Hülsenkörpers 4 in radialer Richtung auf die Längsmittelachse 8 erzeugt wird.

Das in Fig. 16 dargestellte Sperrglied 21 ist entlang der Längsmittelachse 8 der Blockierhülse 1 bzw. der dazu konzentrischen Lenkspindel 2 axial - gemäß der durch einen Pfeil 87 dargestellten Richtung - verschiebbar ausgebildet, wobei das Sperrglied 21 einen bevorzugt kegelradartigen Zahnkranz 88 aufweist, der die Rastzähne 81 umfasst. Das Sperrglied 21 ist um die Längsmittelachse 8 verdrehfest ausgebildet und in Freigabestellung außer Eingriff mit den Rastausnehmungen 5 der Blockierhülse 1 und nicht mit der Lenkspindel 2 gekoppelt. Bei Überführung des Sperrglieds 21 in Sperrstellung 21 (in Fig. 16 strichliert dargestellt) kommt es zu einem Eingriff des Zahnkranzes 88 des Sperrglieds 21 mit dem Zahnkranz 84 der Blockierhülse 1, wobei die Rastzähne 81 des Sperrglieds 21 in die Rastausnehmungen 5 der Blockierhülse 1 formschlüssig eingreifen. Der außenliegende Zahnkranz 84 des Sperrglieds 21 und der innenliegende Zahnkranz 81 der Blockierhülse 1 wirken hierbei in Art eines Kegelradpaares zusammen, wobei im das rotationsstarre Sperrglied 21 die Lenkspindel 2 im Falle einer Drehmomentaufbringung gegen Verdrehung blockiert. Zum axial verschiebbaren Sperrglied 21 sei angemerkt, dass dieses im Inneren eines nicht näher dargestellten Führungskastens der Lenkungsanlage 3 angeordnet ist und sich auf dieses abstützt, wobei derartige schieberartige Sperrglieder 21 mit Kegelverzahnung aus dem Stand der Technik bekannt sind.

In Fig. 15 ist eine weitere Möglichkeit einer Ausgestaltung der Innenseite 7 des hohlprofilartigen Hülsenkörpers 4 dargestellt, bei der dieser im Lagerabschnitt 10 zumindest über einen Teilbereich der Stützfläche 12 durch die gleitfähige Struktur 89 gebildet ist, wobei diese näher im Zuge der Fig. 22 und 23 beschrieben ist.

Zu den in den Fig. 1 bis 16 beschriebenen Ausführungsvarianten sei angemerkt, dass der Hülsenkörper 4 in zumindest einem Verbindungsbereich 82 über ein in der Trennfuge 45 verlaufendes Verbindungselement 44 unlösbar zu einem zumindest teilweise geschlossenen Hohlprofil, das aus ein oder mehreren Teilen gebildet ist, verbunden ist. Die Trennfuge 45 verläuft dabei jeweils zwischen zwei sich gegenüberliegenden Längsseitenkanten 46, 47, die um eine Spaltbreite 83 voneinander distanziert sind.

Das Verbindungselement 44 ist vorzugsweise durch eine Schweißnaht gebildet, wobei hierzu insbesondere eine Laser- oder Plasmaschweißnaht aufgrund des verzugsarmen Verbindungsvorganges verwendet werden kann. Das Verbindungselement kann weiters durch eine Klebeschicht, eine Lötverbindung oder dgl. gebildet sein, wobei derartige Verbindungsverfahren aus dem Stand der Technik bekannt sind.

Zum Hülsenkörper 4 sei im Allgemeinen angemerkt, dass dieser aus nur einem einzigen Fügeteil bestehen kann, wie dies in den Fig. dargestellt ist, wobei dieser eine hohlprofilartige Form, insbesondere eine zumindest teilweise zylindrische oder ringförmige Form aufweist und im Verbindungsbereich 82 die Trennfuge 45 über die Hülsenlänge 11 durchgehend verläuft. Es ist jedoch auch möglich, dass der Hülsenkörper 4 aus mehreren, miteinander in Verbindungsbereichen 82 zu einem geschlossenen Hohlprofil verbunden Fügeteilen gebildet ist. Jeder Fügeteil ist dabei an zwei Verbindungsbereichen 82 über ein Verbindungselement 44 mit dem benachbarten Fügeteilen unlösbar verbunden.

In den Fig. 17 bis 23 ist jeweils ein Teilbereich der Blockierhülse 1 dargestellt, in der der zumindest eine Lagerabschnitt 10 verläuft.

Im Allgemeinen sei zum Lagerabschnitt 10 angemerkt, dass dieser innenseitig im Bereich der Durchgangsöffnung 9 die Stützfläche 12 aufweist, die an der Außenoberfläche 15 der Lenkspindel 2 reibschlüssig befestigt bzw. befestigbar ist, wie dies vorstehend bereits beschrieben wurde. Der Reibschluss zwischen der Stützfläche 12 und der Außenoberfläche 15 wird dadurch erreicht, dass der Hülsenkörper 4 im Lagerabschnitt 12 mit einer Klemmspannung an der Lenkspindel 2 angebracht ist. Dabei ist es möglich, dass diese Klemmspannung durch Verformung mindestens eines der beiden aneinanderliegenden Teile, also Hülsenkörper 4 oder Lenkspindel 2, im Bereich des Lagerabschnitts 10 erzeugt wird, sodass im verformten Teil eine innere Spannung, insbesondere Zugspannung, hervorgerufen wird. Es ist beispielsweise möglich die Klemmspannung durch Aufweiten der gegenüber der Stützfläche 12 innenliegenden Lenkspindel 2 oder ein Aufschrumpfen des Lagerabschnitts 10 des Hülsenkörpers 4 auf die Außenoberfläche 15 der Lenkspindel 2 herzustellen.

In einer bevorzugten Ausführungsvariante erfolgt die Erzeugung der Klemmspannung jedoch durch plastische Verformung des Lagerabschnitts 10 des Hülsenkörpers 4 in auf die Längsmittelachse 8 des Hülsenkörpers 4 normaler Richtung, wobei die Lenkspindel 2 mit der Außenoberfläche 15 in ihrer Form unverändert bleibt. Hierzu ist der Innendurchmesser 59a im Lagerabschnitt 10 am Hülsenkörper 4 in dessen Urform, d.h. im nicht plastisch aufgeweiteten Zustand, zumindest geringfügig kleiner bemessen als ein Spindeldurchmesser 60a der Lenkspindel 2. Die Urform des Lagerabschnitts 10 der Blockierhülse 1 beschreibt jene Form, in der die Blockierhülse 1 als gefertigter, loser Einzelteil vorliegt und noch nicht auf die Lenkspindel 2 aufgebracht bzw. aufgeschoben wurde.

Bei Aufschieben der Blockierhülse 1 auf die Lenkspindel 2 folgt nun in zumindest den Bereichen, in denen eine reibschlüssige Verbindung zwischen der Stützfläche 12 und Außenoberfläche 15 ausgebildet werden soll, eine Verformung des Lagerabschnitts 10 bis zur Überschreitung der Elastizitätsgrenze des Materials, aus dem der Lagerabschnitt 10 besteht. In Sperrstellung des Sperrglieds 21 - also bei arretierter Blockierhülse 1 und somit gegen Verdrehung feststehender Lenkspindel 2 - wird bei Verdrehen eines Lenkrades über die Lenkspindel 2 ein Drehmoment erzeugt, welchem ein gleich großes Drehmoment über den Sperrwiderstand an des in die Rastausnehmung 5 der Blockierhülse 1 eingreifenden Sperrglieds 21 entgegen wirkt. Die Verbindungsfestigkeit des Reibschlusses zwischen der an die Außenoberfläche 15 der Lenkspindel 2 angepressten Stützfläche 12 im Lagerabschnitt 10 der Blockierhülse 1 ist derart bemessen, dass sich der Reibschluss bei Übersteigen eines der maximalen Reibkraft entsprechenden Grenzdrehmomentwertes löst und die Lenkspindel 2 in der Verbindung durchrutscht. Die Verbindungsfestigkeit und der Grenzdrehmomentwert der reibschlüssigen Verbindung wird durch den Haftreibungskoeffizienten, sowie die effektive Kontaktfläche dieser Verbindung, welche durch die Auflagebreite 20, den Innendurchmesser 59a sowie den Flächenanteil der in der Stützfläche 12 vertieften Schmiertaschen 24 bestimmt ist, bestimmt. Dieser Grenzdrehmomentwert liegt beispielsweise im Bereich von 50 bis 300 Nm, insbesondere ca. 100 bis 200 Nm.

Es sei zum Innendurchmesser 59a des Lagerabschnitts 10 der Blockierhülse 1 angemerkt, dass dieser in der Urform gegenüber dem Spindeldurchmesser 60a, 60b der Lenkspindel 2 ein Untermaß von beispielsweise 0,1 bis 1 mm, insbesondere 0,2 bis 0,7 mm, bevorzugt 0,3 mm bis 0,5 mm aufweist, sodass bei Aufziehen oder Aufschieben der Blockierhülse 1 auf die Lenkspindel 2 eine plastische Verformung des Lagerabschnitts 10 in radialer Richtung auf dessen Längsmittelachse 8 erfolgt.

Um nun ein Aufschieben oder Aufziehen der Blockierhülse 1 auf die Lenkspindel 2 zu ermöglichen, ohne dass an der Stützfläche 12 des Lagerabschnitts 10 oder der Außenoberfläche 15 der Lenkspindel 2 ein wesentlicher Materialabrieb bzw. Fressen von Material erfolgt, sind an der Stützfläche 12 vorzugsweise mehrere der Schmiertaschen 24 vertieft angeordnet oder es ist die an sich bekannte gleitfähige Struktur 89 mit der Stützfläche 12 innenseitig am Hülsenkörper 4 vorgesehen. Diese Schmiertaschen 24 sind jeweils zur Aufnahme eines Schmierstoffes geeignet, wobei als Schmierstoffe reibungsmindernde Schmieröle, Schmierfette oder Festschmierstoffe verwendet werden können, insbesondere synthetische Hochleistungshaftschmierstoffe. Durch die in den Schmiertaschen 24 angeordneten Schmierstoffe erfolgt beim Aufschieben der Blockierhülse 1 auf die Lenkspindel 2 ein Benetzen der aneinander liegenden Stützfläche 12 und Außenoberfläche 15, wodurch die Gleiteigenschaften verbessert werden bzw. beim Aufschiebevorgang der Reibungskoeffizient zwischen der Stützfläche 12 und der Außenoberfläche 15 herabgesetzt wird. Ein ungewollter Materialabrieb, welcher eine Beschädigung der Kontaktflächen durch Bildung von Riefen oder dergleichen zur Folge hat kann verhindert werden und die Verbindungsfestigkeit der reibschlüssigen Verbindung in Montageposition der Blockierhülse 1 an der Lenkspindel 2 kann im Wesentlichen vorbestimmt und reproduziert werden.

Mögliche Ausführungsbeispiele für die Anordnung der Schmiertaschen 24 in der Stützfläche 12 im Lagerabschnitt 10 sind in den Fig. 17 bis 21 dargestellt, wobei die Innenseite 7 des Hülsenkörpers 4 in den Lagerabschnitten 10 eine Riffelung bzw. Profilierung oder Perforierung aufweist. Die die Schmiertaschen 24 umschließende Begrenzungsfläche 25 kann dabei eine kreisbogenartige, dreieckförmige, rechteck- oder trapezförmige oder ähnliche Querschnittskonturen aufweisen. Eine Tiefe der Schmiertaschen 24, über die die Begrenzungsfläche 25 der Schmiertaschen 24 gegenüber der Stützfläche 12 vertieft ist, beträgt beispielsweise 0,05 bis 1 mm, insbesondere 0,1 bis 0,5 mm, vorzugsweise 0,1 bis 0,3 mm. Die Einbringung der Schmiertaschen 24 in die Stützflächen 12 kann in einem spanlosen Urformvorgang oder durch spanende Materialabtragung, beispielsweise Stoßen, Fräsen oder dergleichen, erfolgen.

Die Schmiertaschen 24 können an der Umfangskontur 13 der Stützfläche 12 gleichmäßig bzw. symmetrisch verteilt angeordnet sein, wobei jeweils zueinander benachbarte Schmiertaschen denselben Abstand 78 voneinander distanziert sind. Selbstverständlich ist auch eine ungleichmäßige bzw. unsymmetrische Verteilung der Schmiertaschen 24 in der Umfangskontur 13 der Stützfläche 12 möglich. Weiters ist es möglich, dass im Falle von zwei Lagerabschnitten 10 am Hülsenkörper 4, die jeweils in einem der Endbereiche 16, 17 angeordnet sind, die Schmiertaschen 24 in den Stützflächen 12 jeweils gleichartig zueinander verlaufen, oder die Schmiertaschen 24 in den Stützflächen 12 unterschiedlich zueinander verlaufen, insbesondere gegengleich oder spiegelverkehrt zueinander in der Stützfläche 12 angeordnet sind.

Bei der in Fig. 17 gezeigten Ausführungsvariante sind die Schmiertaschen 24 jeweils durch rillenartige bzw. nutartige Vertiefungen gebildet, die in einem Winkel 76 quer zur Längsmittelachse 8 der Blockierhülse 1 über die gesamte Auflagebreite 20 entlang deren Längsachse 77 verlaufen. In der Fig. 18 ist eine zweite mögliche Ausführungsvariante einer Anordnung der Schmiertaschen 24 an der Stützfläche 12 gezeigt, wobei sich die Schmiertaschen 24 parallel zur Längsmittelachse 8 des Hülsenkörpers 8 entlang der Längsachse 77 erstrecken. Die Fig. 19 zeigt eine dritte Ausführungsvariante einer möglichen Anordnung der Schmiertaschen 24 in der Stützfläche 12, wobei dieser jeweils als mehrschenkelige, zackenförmige Vertiefungen gebildet sind. Jeder der Schenkel 79a, 79b verläuft dabei in einem stumpfen bzw. spitzen Winkel 76 zur Längsmittelachse 8 des Hülsenkörpers 1. In Fig. 20 ist eine vierte, mögliche Ausführungsvariante der Schmiertaschen 24 in der Stützfläche 12 dargestellt, bei der diese jeweils abgewinkelt gemäß dem Winkel 76 zur Längsmittelachse 8 des Hülsenkörpers 1 verlaufen und jeweils zwei benachbarte Schmiertaschen 24 stumpf- oder spitzwinkelig zueinander verlaufen. In der Fig. 21 ist eine fünfte mögliche Ausführungsvariante einer Anordnung der Schmiertaschen 24 an der Stützfläche 12 gezeigt, wobei die die Schmiertaschen 24 in der Stützfläche 12 als runde und/oder ellipsenförmige Vertiefungen ausgebildet sind, die unregelmäßig über den Lagerabschnitt 12 über den Umfang des Hülsenkörpers 4 an der Innenseite 7 verteilt angeordnet sind.

Es besteht weiters die Möglichkeit, dass die Schmiertaschen 24 in der Stützfläche 12 in Form von Mikrostrukturen, beispielsweise unregelmäßige, sehr kleine Vertiefungen, ausgebildet sind. Eine weitere Möglichkeit besteht darin, dass die Schmiertaschen 24 in der eben ausgebildeten Stützfläche 12 durch zwischen Profilkuppen liegende Profiltäler des wirklichen Profils der Stützfläche 12 gebildet sind, wobei das wirkliche Profil bzw. Oberflächen- Rauhigkeitsprofil eine mittlere Rautiefe von 0,2 bis 200 µm aufweist.

In den Fig. 22 und 23 ist eine sechste mögliche Ausführungsvariante einer Ausgestaltung der Innenseite 7 des Hülsenkörpers 4 im Lagerabschnitt 12 gezeigt, bei der der Hülsenkörper 4 an der Innenseite 7 im Lagerabschnitt 10 zumindest über einen Teilbereich durch die an sich bekannte gleitfähige Struktur 89 gebildet ist, an der die Stützfläche 12 ausgebildet ist oder neben der die Stützfläche 12 verläuft. Die gleitfähige Struktur 89 ist vorzugsweise einstückig, insbesondere unlösbar, mit dem Hülsenkörper 4 verbunden und es bildet diese eine an der Innenseite 7 des Hülsenkörpers 4 liegende Gleitschicht im Lagerabschnitt 10 aus.

Die gleitfähige Struktur 89 kann durch eine flächig auf den Hülsenkörper 4 aufgebrachte Beschichtung, insbesondere eine Blechbeschichtung oder dergleichen, gebildet sein bzw. bei der Herstellung an der Innenseite 7 des Hülsenkörpers 4 im Lagerabschnitt 10 flächig aufgetragen werden. Das Material der Beschichtung ist derart ausgewählt, dass eine die aneinanderliegende Werkstoffpaarung zwischen Lenkspindel 2 und Blockierhülse 1 einen geringen Reibungskoeffizienten ausbildet. Nach einer anderen Ausführung kann eine gleitfähige Struktur 89 an der Innenseite 7 des Hülsenkörpers 4 vorgesehen sein, die durch ein Oberflächenveredelungsverfahren, beispielsweise thermisch oder chemisch Härten, Phosphatieren, Nitrieren, erzeugt wird, sodass die gleitfähige Struktur 89 eine veredelte Stützfläche 12 bildet.

Es besteht weiters die Möglichkeit, dass die Lenkspindel 2 eine Beschichtung oder behandelte Oberfläche aufweist, beispielsweise dass die Lenkspindel 2 eine im Zusammenwirken mit der Blockierhülse 1 reibungsmindemde Gleitschicht mit der Außenoberfläche 15 im Aufschiebeabschnitt für die Blockierhülse 1 aufweist und/oder die Lenkspindel 2 im Bereich einer Befestigungsstelle der Blockierhülse 1 eine im Zusammenwirken mit der Blockierhülse 1 reibungserhöhende Reibschicht aufweist.

Es ist anzumerken, dass eine der in den Fig. 17 bis 23 dargestellten Ausführungsvarianten in Kombination mit einer der Ausführungsvarianten einer Blockierhülse 1, wie diese in den Fig. 1 bis 16 vorstehend beschrieben wurden, ausgebildet sein können, d.h. die Lagerabschnitte 10 des Hülsenkörpers 4 in Fig. 1 bis 16, wie dies in einer der in Fig. 17 bis 23 beschrieben ist, gebildet sein können.

Eine eigenständige Lösung der Aufgabe der Erfindung betrifft die Lenkungsanlage 3 eines Kraftfahrzeuges, die das Lenkschloss 22 mit dem in Freigabe oder Sperrstellung überführbaren Sperrglied 21 und die Lenkspindel 2 mit dem auf dieser angeordneten Blockierhülse 1 umfasst. Wie vorstehend beschrieben, ist die Blockierhülse 1 dabei mit einer Klemmspannung zur Herstellung einer reibschlüssigen Verbindung im Lagerabschnitt 10 der Blockierhülse 1 an der Lenkspindel 2 angebracht, wobei das Sperrglied 21 in Sperrstellung einer der Rastausnehmungen 5 der Blockierhülse 1 bevorzugt formflüssig in Eingriff steht. Somit blockiert in Sperrstellung des Sperrglieds 21 die Lenkspindel 2 und ist gegen Verdrehung gesichert, wobei bei Auftreten eines Drehmomentes an der Lenkspindel 2, das den Grenzdrehmomentwert übersteigt, sich der Reibschluss zwischen Lenkspindel 2 und Lagerabschnitt 10 des Hülsenkörpers 4 löst und die Lenkspindel 2 relativ zur Blockierhülse 1 in einer Verdrehbewegung nach dem Funktionsprinzip einer Rutschkupplung durchrutscht.

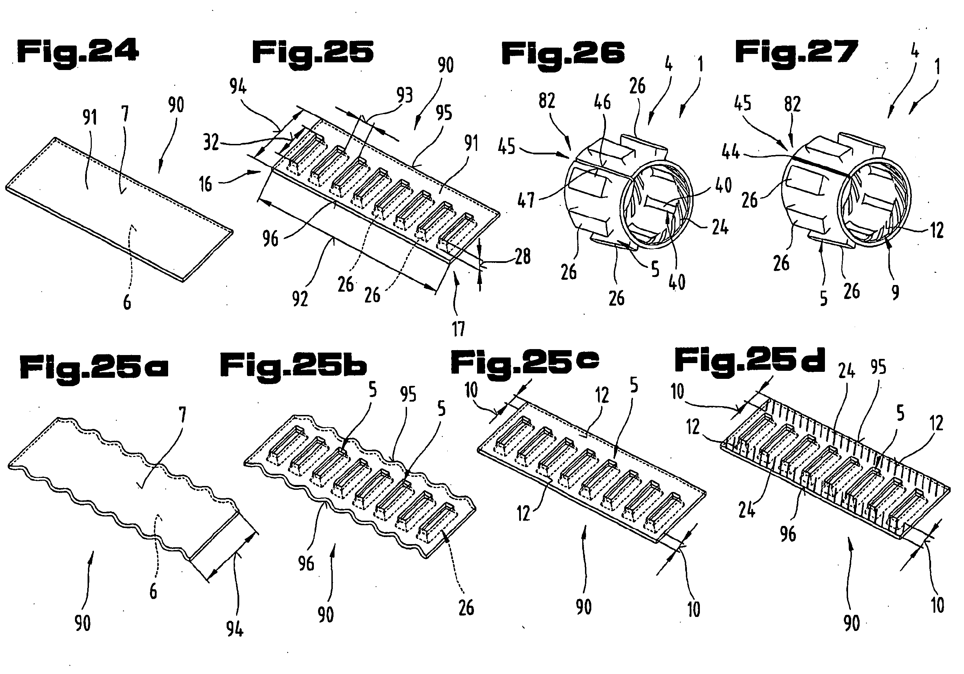

In den Fig. 24 bis 38 sind mögliche Varianten von Verfahrensabläufen zur Herstellung der mehrere Rastausnehmungen 5 für ein Sperrglied 21 der Lenkungsanlage 3 aufweisenden Blockierhülse 1, die wie vorstehend beschrieben ausgebildet sein kann, dargestellt. Hierbei wird zumindest ein die Rastausnehmungen 5 aufweisender, platinenartiger Zuschnitt 90, insbesondere Blechteil 91, durch Umformen zu einem im Querschnitt hohlprofilartigen, insbesondere rohrförmigen, Hülsenkörper 4 mit zumindest einer Trennfuge 45 geformt und der Hülsenkörper 4 an jeder Trennfuge 45 über ein Verbindungselement 44 zu einem geschlossenen Hohlprofil verbunden.

In den Fig. 24 bis 27 ist ein erstes Beispiel eines Verfahrensablaufs zur Herstellung der Blockierhülse 1 für Lenkungsanlagen 3 dargestellt, wobei die Blockierhülse 1 bevorzugt gemäß der in Fig. 1 bis 3 bzw. 12 und 13 dargestellten und beschriebenen Ausführungsvarianten ausgebildet ist. Hierbei werden am Hülsenkörper 4 der Blockierhülse 1 mehrere Rastausnehmungen 5 angebracht, mit denen das Sperrglied 21 der Lenkungsanlage 3 in Eingriff bringbar ist und es wird zumindest ein hohlprofilartiger, insbesondere zylindrischer, Lagerabschnitt 10 der Hülsenlänge 11 ausgebildet, der reibschlüssig bzw. mit einer Klemmspannung an der Lenkspindel 2 der Lenkungsanlage 3 anbringbar ist.

In Fig. 24 ist ein platinenartiger Zuschnitt 90, insbesondere Blechteil 91, dargestellt, der an dessen Innenseite 7 bzw. Außenseite 6 ebenflächig bzw. planar ausgebildet ist. Es ist nun möglich, dass in einem ersten Verfahrensschritt gemäß Fig. 24 am platinenartigen Zuschnitt 90 die Auskragungen 26 ausgeformt werden, wobei die Auskragungen 26 vorzugsweise in einer Reihe nebeneinanderliegend über eine Zuschnittlänge 92 des Zuschnitts 90, jeweils um einen gleichbleibenden Abstand 93 über die Zuschnittlänge 92 voneinander distanziert, angeordnet werden. Über einen Teil einer Zuschnittbreite 94, welche bevorzugt der Hülsenbreite 11 der gefertigten Blockierhülse 1 entspricht, erstreckt sich der zumindest eine Lagerabschnitt 10, wobei dieser über die gesamte Zuschnittlänge 92, insbesondere entlang der Längsseitenkanten 95, 96, verläuft. Die Auskragungen 26 werden über die Höhe 28 senkrecht auf die Außenseite 6 des Zuschnitts 90 ausgeformt. Das Formen der Auskragungen 26 erfolgt vorzugsweise in einem spanlosen Umformvorgang, wie dieser den Fig. 25a bis 25c detailliert dargestellt ist.

Dabei wird der platinenartige Zuschnitt 90 in einem ersten Umformschritt gemäß Fig. 25a in eine über die Zuschnittbreite 94 durchgängige Wellenform gebracht, wobei die Wellenform beispielsweise einer Sinusform oder Zacken- bzw. Rechteckform, entspricht. Die Innen- bzw. Außenseite 6, 7 des gewellten Zuschnittes 90 weist somit erhabene bzw. zwischen diesen liegenden vertiefte Bereiche auf, wobei in den vertieften Bereichen bzw. Ausbauchungen an der Innenseite 7 in einem weiteren Umformschritt nach Fig. 25b die Auskragungen 26 in Richtung der Außenseite 6 ausgeformt werden. Das Ausformen der Auskragungen 26 erfolgt beispielsweise durch Tiefziehen, wobei ein entsprechendes Tiefziehwerkzeug aus einem Stempel und einer Matrize besteht und die Herstellung der endgültigen Form der Auskragungen in mehreren Zügen erfolgen kann. Zum Tiefziehwerkzeug, welches nicht näher dargestellt ist, sei angemerkt, dass der Stempel in Art eines konturveränderlichen Spreizdomes bzw. die Matrize in Art einer konturveränderlichen Spreizmatrize gebildet sein kann, mit der sich hinterschneidende Formen von Auskragungen 26, beispielsweise die dargestellte trapezförmigen Auskragungen 26, herstellbar sind, wobei derartige Tiefziehwerkzeuge aus dem Stand der Technik bekannt sind und auf dieser Stelle nicht näher auf diese eingegangen wird.

Die Herstellung einer Wellenform gemäß Verfahrensschritt nach Fig. 25a und ein erst daraufhin folgendes Fertigziehen der Auskragungen 26 von Vorteil, da durch die bereits vorgeformten, vertieften Bereiche am gewellten Zuschnitt 90 ein geringerer Umformungsgrad bis zur endgültigen Herstellung der Trapezform oder Rechteckform der Auskragungen 26 notwendig ist, wodurch Rissbildung in den Bereichen mit sehr hohen Umformgraden, insbesondere den Biegeradien, vermieden wird.

Im Verfahrensschritt nach Fig. 25c wird der gewellte Bereich an den Längsseitenkanten 95, 96, in welchen die Lagerabschnitte 10 ausgebildet werden sollen, wiederum in eine ebenflächige bzw. planare Form zurückgeformt. Dies erfolgt beispielsweise durch Ebendrücken bzw. Ebenpressen ausschließlich im Bereich der Längsseitenkanten 95, 96 in den späteren Lagerabschnitten 10.

In einem weiteren Verfahrensschritt nach Fig. 25d kann das Anbringen der Schmiertaschen 24 oder der an sich bekannten gleitfähigen Struktur 89 an der Innenseite 7 an den Lagerabschnitten 10 erfolgen, wobei dies im Falle der Schmiertaschen 24 beispielsweise durch spanenden Materialabtrag, insbesondere durch Fräsen, Stoßen, Erosion oder dgl., oder spanlos durch Urformen erfolgen kann und im Falle der gleitfähigen Struktur 89 durch Auftragen einer Beschichtung, insbesondere Blechbeschichtung, oder Bearbeitung der Stützfläche 12 in einem Oberflächenbehandlungsverfahren bzw. Oberflächenveredelungsverfahren erfolgen kann. Es ist jedoch auch möglich, dass die Schmiertaschen 24 oder die gleitfähige Struktur 89 in einem früheren Verfahrensschritt, z.B. am platinenartigen Zuschnitt 90 nach Fig. 19, oder einem späteren Verfahrensschritt, z.B. am hohlprofilartigen Hülsenkörper 4 gemäß Fig. 21 und 22, angebracht werden.

In einem weiteren, nicht dargestellten Verfahrensschritt kann nach der Herstellung der Schmiertaschen 24 in der Stützfläche 12 ein Einbringen bzw. Auftragen eines Schmierstoffes, insbesondere Schmieröls oder Schmierfetts oder Festschmierstoffs, durch Benetzen bzw. Befüllen der Schmiertaschen 24 mit diesem erfolgen.

Im Verfahrensschritt nach Fig. 26 erfolgt das Umformen des platinenartigen Zuschnitts 90 in den hohlprofilartigen, insbesondere rohrförmigen Hülsenkörper 4. Das Umformen in die hohlprofilartige Form des Hülsenkörpers 4, die bevorzugt im wesentlichen zylinderförmig ist, kann dabei durch Einrollen des Zuschnitts 90 um einen Dorn erfolgen, bis die Durchgangsöffnung 9 im Inneren des Hülsenkörpers 4 ausgeformt ist und in den Lagerabschnitten 10 eine ringförmige bzw. zylindrische Form hergestellt ist. Das Einrollen des platinenartigen Zuschnitts zum hohlprofilartigen Hülsenkörper 4 kann dabei in mehreren Umform- bzw. Biegegeschritten erfolgen, wie dies schematisch in den Fig. 26a und 26b dargestellt ist. So kann in einem ersten Umformschritt des Einrollvorganges der platinenartige Zuschnitt 90 in eine U-Form oder kreisbogenartige Form gebracht werden und in ein oder mehreren weiteren Umformschritten der Zuschnitt 90 in eine zylindrische bzw. kreisrunde, den Dorn umschließende Form, gebracht werden. Werkzeuge für einen derartigen Einrollvorgang sind aus dem Stand der Technik bekannt, wobei insbesondere der Dorn und ein Antrieb, insbesondere Keiltrieb, zur automatisierten Herstellung der den Dorn umschließenden Form des Hülsenkörpers 4 verwendet werden. Der hohlprofilartige Hülsenkörper 4 weist nach Durchführung des Verfahrensschrittes gemäß Fig. 26 die Trennfuge 45 auf, die sich zwischen zwei gegenüberliegenden Längsseitenkanten 46, 47 erstreckt.

In einem weiteren Verfahrensschritt gemäß Fig. 27 erfolgt das Anbringen des Verbindungselementes 44 in der Trennfuge 45, sodass der Hülsenkörper 4 unlösbar über das Verbindungselement 44 zu einem geschlossenen Profil verbunden wird. Das Verbindungselement 44 kann in einem aus dem Stand der Technik bekannten Schweißverfahren, insbesondere Laser- oder Plasmaschweißen, angebracht werden, wobei dies mit oder ohne einem einzubringenden Zusatzwerkstoff erfolgen kann. Weiters ist es möglich, dass im Verbindungsbereich 82 eine Kleberschicht oder Lötverbindung oder dgl. angebracht wird. Der Verbindungsbereich 82 mit dem Verbindungselement 44 weist dabei eine höhere Festigkeit, beispielsweise eine um 100 bis 400%, insbesondere 200 bis 300% höhere Zugfestigkeit bzw. Streckgrenze auf, als das Material, aus dem der restliche Hülsenkörper 4 gebildet ist. Prozessbedingt erfolgt beim Laserschweißen oder Plasmaschweißen ohne Zusatzwerkstoff eine Querschnittsverminderung der Wandstärke 43 des Hülsenkörpers 4 im Verbindungsbereich 82 nach Anbringen des Verbindungselements 44. Das Material des Hülsenkörpers 4 ist bevorzugt aus einer Werkstoffgruppe ausgewählt, bei der das Material der Schweißnaht im verfestigten Zustand nach erfolgter Gefügeveränderung im Verbindungsbereich 82 eine höhere Streckgrenze und Zugfestigkeit aufweist als das restliche Material des Hülsenkörpers 4 bzw. der Grundwerkstoff, wie dies vorstehend bereits beschrieben wurde. Die Festigkeit der durch Laser- oder Plasmaschweißen hergestellten Schweißnaht ist gegenüber dem restlichen Hülsenkörper 4 dabei prozentuell bzw. verhältnismäßig höher, als die Festigkeitsverringerung hervorgerufen durch die Verminderte Wandstärke 43 im Verbindungsbereich. Ein Bruch im Verbindungsbereich 82 kann bei plastischer Verformung im Lagerabschnitt 10 des Hülsenkörpers 4 somit verhindert werden. Beispielsweise beträgt die Streckgrenze der Blockierhülse 1 außerhalb des Verbindungsbereichs ca. 250 N/mm2 und die Streckgrenze eines als Schweißnaht gebildeten Verbindungselements 44 ca. 700 N/mm2.

Vor dem Anbringen des Verbindungselementes 44 in der Trennfuge 45 kann ein plastisches Aufweiten des Hülsenkörpers 4 im Bereich der Längsseitenkanten 46, 47 in radialer Richtung auf die Längsmittelachse 8 erfolgen, wobei der aufgeweitete Bereich beispielsweise um 0,1 bis 0,5 mm, insbesondere ca. 0,3mm, radial nach außen verformt wird. Wird nun das Verbindungselement 44 in der Trennfuge 45 angeordnet, kann es vorkommen, dass dieses radial nach innen über die Längsseitenkante 46, 47 in die Durchgangsöffnung 9 hineinragt, wobei dies insbesondere bei Schweißnähten - bedingt durch beim Schweißprozess in Richtung der Durchlassöffnung 9 ablaufender Schmelze - der Fall sein kann. Durch eine Umfangskontur 13 des Lagerabschnitts 10, die aufgrund des geringfügig aufgeweiteten Bereichs im Verbindungsbereich 82 nicht vollkommen zylindrisch bzw. zentrisch zur Längsmittelachse 8 verläuft, können diese vorspringenden Teile des Verbindungselements im zusätzlich gebildeten Zwischenraum an der Innenseite 7 des aufgeweiteten Bereichs aufgenommen werden, wodurch die Lenkspindel 2 in der Durchgangsöffnung 9 unbehindert verlaufen kann. Eine Nachbearbeitung im Verbindungsbereich 82, beispielsweise ein Abschleifen der Schweißnaht, ist somit vorteilhafter Weise nicht notwendig.

Ein weiterer möglicher Verfahrensablauf zur Herstellung einer Blockierhülse 1 ist in den Fig. 28 bis 31 dargestellt, wobei die Blockierhülse 1 bevorzugt gemäß der in Fig. 4 bis 6 dargestellten und beschriebenen Ausführungsvarianten ausgebildet ist. Der platinenartige Zuschnitt 90, insbesondere Blechteil 91, wie gemäß Fig. 28 dargestellt, wird in einem Verfahrensschritt nach Fig. 29 mit den Rastausnehmungen 5 versehen. Dies erfolgt in einem Trennvorgang, insbesondere Lochvorgang, indem über die Wandstärke 43 des platinenartigen Zuschnitts 90 verlaufende Materialdurchbrüche 97 ausgeschnitten werden, wie in Fig. 29a dargestellt. Diese Materialdurchbrüche 97 werden um den Abstand 93 voneinander distanziert über die Zuschnittlänge 92 in einer Reihe parallel zueinander angeordnet. In einem weiteren Verfahrensschritt gemäß Fig. 29b werden die zu den Materialdurchbrüchen 97 umliegenden Bereiche am platinenartigen Zuschnitt 90 jeweils zu einem der Umlaufstege 49 ausgeformt. Das Ausformen der Umlaufstege 49 erfolgt durch Aufbiegen oder Aufweiten der um die Materialausschnitte liegenden Bereiche, sodass gemäß der dargestellten Ausführungsvariante durch die Umlaufstege 49 begrenzte Rastausnehmungen 5 mit der innenliegenden Anschlagfläche 29 ausgebildet werden. Die Umfangskante 51 bzw. Anschlagfläche 29 kann dabei eine ovale, ringförmige oder rechteckförmige, die Rastausnehmung 5 begrenzende, geschlossene Kontur oder eine geöffnete Kontur aufweisen. Das Ausformen der Umlaufstege 49 kann unter Verringerung der Wandstärke 43 des Zuschnitts 90 aufgrund von Materialstreckung erfolgen oder durch Umbiegen von einzelnen, laschenartigen Umlaufstegen 49 unter Beibehaltung der Wandstärke 43 erfolgen.

In einem weiteren Verfahrensschritt nach Fig. 29c kann das Ausformen der Aufweitung 53 am Zuschnitt 90 erfolgen, wobei hierzu die um die Aufweitung 53 liegenden Lagerabschnitte 10 der Zuschnittbreite 94 gegenüber der Aufweitung 53 rückgesetzt werden, insbesondere durch Rückziehen der Lagerabschnitte 10 oder Ausbauchen der Aufweitung 53 der Absatz 62 gebildet wird. Somit wird ein wannenartiger, vertiefter Verlauf der Aufweitung 53 an der Innenseite 7 des Zuschnitts 90 über einen Teil der Zuschnittbreite 94 geformt, wobei die Aufweitung 53 über die Zuschnittlänge 92 durchgehend verläuft.

Im Verfahrensschritt nach Fig. 30 erfolgt die Herstellung des hohlprofilartigen Hülsenkörpers 4 durch Einrollen, wobei dieser Vorgang analog zu dem in Fig. 26 beschrieben erfolgen kann. In Fig. 31 wird über das Verbindungselement 44 der über die Trennfuge 45 geöffnete Hülsenkörper 4 zu einem geschlossenen Hohlkörper 4 unlösbar verbunden, wobei dieser Vorgang, wie in Fig. 27 beschrieben, erfolgen kann.

In den Fig. 32 bis 37 ist eine weitere Möglichkeit eines Verfahrensablaufs zur Herstellung der Blockierhülse 1, die insbesondere nach Fig. 14 gebildet ist, dargestellt. Es wird dabei, wie in Fig. 32 dargestellt, ein platinenartiger Zuschnittteil 90 verwendet, der an dessen Außenseite 6 eine Profilierung 98 aufweist und an dessen Innenseite 7 ebenflächig bzw. planar ausgebildet ist. Durch die Verwendung eines bereits profilierten Blechteils 91 als Zuschnitt 90 kann die Herstellung von Rastausnehmungen 5 entfallen, da diese zwischen den Auskragungen 26 der Profilierung 98 bereits ausgebildet sind. Es kann hierbei beispielsweise ein Blechteil 91 mit einer kerbzahnartigen Profilierung 98 verwendet werden. Somit ist es möglich, dass der Lagerabschnitt 10 über die gesamte Zuschnittbreite 94 bzw. die gesamte Hülserllänge 11 ausgebildet wird, wobei hierzu an der Stützfläche 12 an der Innenseite 7 des Zuschnitts 90 bzw. Hülsenkörpers 4 die in der Stützfläche 12 vertieften Schmiertaschen 24 oder die an sich bekannte gleitfähige Struktur 89 angeordnet werden.

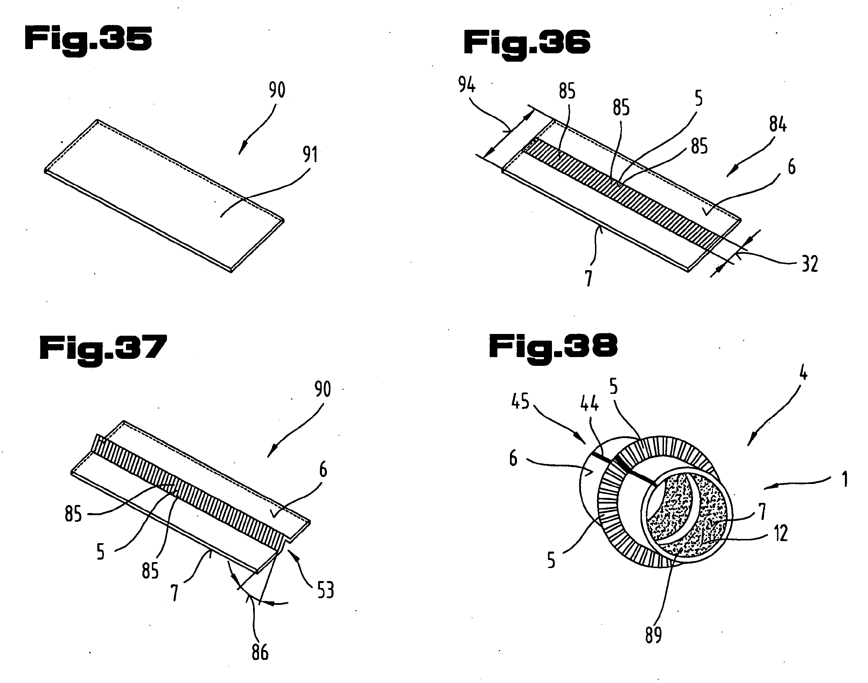

Ein derartiger, profilierter Zuschnitt 90 kann in einem Verfahrensschritt gemäß Fig. 33 bzw. einem Verfahrensschritt gemäß Fig. 37 zu einem geschlossenen, hohlprofilartigen Hülsenkörper 4 gefertigt werden, wobei der Einrollvorgang gemäß Fig. 26 bzw. das Anordnen des Verbindungselements 44 gemäß Fig. 37 erfolgen kann.

Die Fig. 35 bis 38 zeigen eine weitere Möglichkeit eines Verfahrensablaufs zur Herstellung der Blockierhülse 1, die insbesondere gemäß Fig. 15 und 16 gebildet ist. Der platinenartige Zuschnitt 90 nach Fig. 35 wird hierbei in einem ersten Verfahrensschritt nach Fig. 36 mit den zwischen Zähnen 85 angeordneten Rastausnehmungen 5 an der Außenseite 6 versehen, die sich über die Länge 32 über einen Teil der Zuschnittbreite 94 erstrecken, sodass ein Zahn- bzw. Rastprofil mit einer durch die Zähne 85 gebildeten Gerad- oder Schrägverzahnung am Zuschnitt 90 gebildet wird. Die Zähne 85 können durch spanende Materialabnahme, beispielsweise durch Fräsen, an der Außenseite 6 gebildet werden, sodass das Zahn- bzw. Rastprofil nur an der Außenseite 6 bevorzugt über die gesamte Zuschnittlänge 92 verläuft und die Innenseite 7 des Zuschnitts 90 ebenflächig ausgebildet ist. Es ist auch die Verwendung eines bereits profilierten Blechteils 91, wie in Fig. 32 beschrieben, möglich.

Im weiteren Verfahrensschritt nach Fig. 37 erfolgt die Herstellung der Aufweitung 53 mit den Zähnen 85 des Zuschnitts 90 über den Teilabschnitt 52 der Zuschnittbreite 94, wobei dies z.B. in einem Ziehvorgang erfolgen kann. Die Zähne 85 und Rastausnehmungen 5 sind dabei an zumindest einer der im Winkel 86 schräg zu den umliegenden Bereichen stehenden Flanken der Aufweitung 53 angeordnet, wobei die Aufweitung 53 zweckmäßigerweise einen Dreiecks- oder Trapezhohlquerschnitt aufweist. In weiteren Verfahrensschritten erfolgt die Herstellung des hohlprofilartigen Hülsenkörpers 4, sowie das Anbringen des Verbindungselements 44 in der Trennfuge 45 und das Anordnen der Schmiertaschen 24 oder der an sich bekannten gleitfähigen Struktur 89, wobei dies analog zur vorstehenden Beschreibung erfolgen kann. Nach dem Formen des hohlprofilartigen Hülsenkörpers 4 weist dieser den vollumfänglich umlaufenden Zahnkranz 84 auf, der in Art eines inneren Kegelrades einer Kegelradpaarung gebildet ist, wie in Fig. 15 und 16 beschrieben.

Im Allgemeinen sei zur Herstellung der Blockierhülse 1 angemerkt, dass diese bevorzugt maschinell und automatisiert an einer entsprechenden Vorrichtung erfolgt.

Der Ordnung halber sei abschließend darauf hingewiesen, dass zum besseren Verständnis des Aufbaus der Blockierhülse 1 und der Lenkungsanlage 3 diese bzw. deren Bestandteile teilweise unmaßstäblich und/oder vergrößert und/oder verkleinert dargestellt wurden.

### Bezugszeichenaufstellung

- 1: Blockierhülse
- 2: Lenkspindel
- 3: Lenkungsanlage
- 4: Hülsenkörper
- 5: Rastausnehmung

- 6: Außenseite
- 7: Innenseite
- 8: Längsmittelachse
- 9: Durchgangsöffnung
- 10: Lagerabschnitt

- 11: Hülsenlänge
- 12: Stützfläche
- 13: Umfangskontur
- 14: Umfangskontur
- 15: Außenoberfläche

- 16: Endbereich
- 17: Endbereich
- 18: Stirnkante
- 19: Stirnkante
- 20: Auflagebreite

- 21: Sperrglied
- 22: Lenkschloss
- 23: Doppelpfeil
- 24: Schmiertasche
- 25: Begrenzungsfläche

- 26: Auskragungen
- 27: Oberfläche
- 28: Höhe
- 29a: Anschlagfläche
- 29b: Anschlagfläche
- 30a: Längsseitenbereich
- 30b: Längsseitenbereich

- 31: Erstreckungsachse
- 32: Länge
- 33: Rastbreite
- 34: Breite
- 35: Sperrbolzen

- 36: Arretierfläche
- 36a: Arretierfläche
- 37: Winkel
- 38: Radialachse
- 39: Deckfläche
- 40: Hohlraum

- 41: Vertiefung
- 42: Innenfläche
- 43: Wandstärke
- 44: Verbindungselement
- 45: Trennfuge

- 46: Längsseitenkante
- 47: Längsseitenkante
- 48: Ausschnitt
- 49: Umlaufsteg
- 50: Ausmaß

- 51: Umfangskante
- 52: Teilabschnitt
- 53: Aufweitung
- 54: Durchmesser
- 55: Durchmesser

- 56: Stirnfläche
- 57: Hüllkörper
- 58: Hüllkörperdurchmesser
- 59a: Innendurchmesser
- 59b: Innendurchmesser
- 60a: Spindeldurchmesser
- 60b: Spindeldurchmesser

- 61: Absatz
- 62: Absatz
- 63: Überlappungsbereich
- 64: Teilabschnitt
- 65: Zwischenbereich

- 66: Laufnase
- 67: Scheitelfläche
- 68: Hüllkreis
- 69: Nasenbreite
- 70: Breite

- 71: Breite
- 72: Zwischenraum
- 73: Sperrbolzenbreite
- 74: Sicke
- 75: Pfeil

- 76: Winkel
- 77: Längsachse
- 78: Abstand
- 79a: Schenkel
- 79b: Schenkel
- 80: Teilungswinkel

- 81: Rastzahn
- 82: Verbindungsbereich
- 83: Spaltbreite
- 84: Zahnkranz
- 85: Zahn

- 86: Winkel
- 87: Pfeil
- 88: Zahnkranz
- 89: Gleitfähige Struktur
- 90: Zuschnitt

- 91: Blechteil
- 92: Zuschnittlänge
- 93: Abstand
- 94: Zuschnittbreite
- 95: Längsseitenkante

- 96: Längsseitenkante
- 97: Materialdurchbruch
- 98: Profilierung

## Patentansprüche

1. Blockierhülse (1) für eine Lenkspindel (2) einer Lenkungsanlage (3) eines Kraftfahrzeuges, die einen Hülsenkörper (4) ausbildet, der mehrere Rastausnehmungen (5) und zumindest einen hohlprofilartigen Lagerabschnitt (10) mit einer innenliegenden Stützfläche (12) aufweist, wobei der Hülsenkörper (4) mit seinem wenigstens einen Lagerabschnitt (10) über einen Reibschluss auf der Lenkspindel (2) montierbar und eine Rastausnehmung (5) mit einem zwischen einer Freigabe- und Sperrstellung verstellbaren Sperrglied (21) der Lenkungsanlage (3) in Eingriff bringbar ist, **dadurch gekennzeichnet, dass** der Lagerabschnitt (10) an seiner Stützfläche (12) mit mehreren vertieft angeordneten Schmiertaschen (24) zur Aufnahme von Schmierstoff versehen ist.

2. Blockierhülse nach Anspruch 1, **dadurch gekennzeichnet, dass** die Schmiertaschen (24) in der Stützfläche (12), insbesondere über eine Auflagebreite (20) rillenartig oder nutartig verlaufen.

3. Blockierhülse nach Anspruch 1 oder 2, **dadurch gekennzeichnet, dass** die Schmiertaschen (24) über eine Umfangskontur (13) der Stützfläche (12) verteilt angeordnet sind und eine profilierte Stützfläche (12) ausbilden.

4. Blockierhülse nach einem der Ansprüche 1 bis 3, **dadurch gekennzeichnet, dass** die Schmiertaschen (24) in Richtung einer Erstreckungsachse (77) verlaufen, wobei die Erstreckungsachse (77) koaxial, normal oder in einem spitzen oder stumpfen Winkel (76) zur Längsmittelachse (8) des Hülsenkörpers (4) steht.

5. Blockierhülse nach einem der Ansprüche 1 bis 4, **dadurch gekennzeichnet, dass** die Schmiertaschen (24) in der Stützfläche (12) als runde oder ellipsenförmige Vertiefungen ausgebildet sind.

6. Blockierhülse nach Anspruch 1, **dadurch gekennzeichnet, dass** die Schmiertaschen (24) in der ebenen Stützfläche (12) durch zwischen Profilkuppen liegende Profiltäler des wirklichen Profils der Stützfläche (12) gebildet sind, wobei dieses Rauhigkeitsprofil eine mittlere Rautiefe von 0,2 µm bis 200 µm aufweist.

7. Blockierhülse nach einem der Ansprüche 1 bis 6, **dadurch gekennzeichnet, dass** die Schmiertaschen (24) über die Umfangskontur (13) der Stützfläche (12) gleichmäßig verteilt sind, insbesondere eine symmetrische Profilierung ausbilden.

8. Blockierhülse nach einem der Ansprüche 1 bis 7, **dadurch gekennzeichnet, dass** der Hülsenkörper (4) aus mehreren, zu einem Hohlprofil verbundenen Fügeteilen, insbesondere vorgeformten Zuschnitten (90), besteht und je zwischen zwei benachbarten Fügeteilen ein Verbindungsbereich (82) mit einer Trennfuge (45) ausgebildet ist.

9. Lenkungsanlage (3) eines Kraftfahrzeugs, die ein Lenkschloss (22) mit einem zwischen einer Freigabe- und Sperrstellung verstellbaren Sperrglied (21) und eine Lenkspindel (2) mit einer auf dieser angeordneten Blockierhülse (1) aufweist, wobei die Blockierhülse (1) über zumindest einem hohlprofilartigen Lagerabschnitt (10) mit einer Klemmspannung auf der Lenkspindel (2) angebracht ist und eine im Lagerabschnitt (10) innenliegende Stützfläche (12) der Blockierhülse (1) reibschlüssig mit einer Außenoberfläche (15) der Lenkspindel (2) in Kontakt steht und das Sperrglied (21) in Sperrstellung mit zumindest einer an der Blockierhülse (1) angeordneten Rastausnehmung (5), insbesondere formschlüssig, in Eingriff steht, wobei die Blockierhülse (1) die Lenkspindel (2) bis zum Auftreten eines Grenzdrehmomentwertes gegen Verdrehung blockiert und bei Überschreiten des Grenzdrehmomentwertes die Lenkspindel (2) gegenüber der Blockierhülse (1) durchrutscht, **dadurch gekennzeichnet, dass** die Blockierhülse (1) nach einem der Ansprüche 1 bis 8 gebildet ist.

## Claims

1. Blocking sleeve (1) for a steering spindle (2) of a steering system (3) of a motor vehicle, which forms a sleeve body (4) which comprises several catch recesses (5) and at least one hollow profile-like bearing section (10) having an inner support surface (12), wherein the sleeve body (4) can be mounted on the steering spindle (2) by means of its at least one bearing section (10) via a frictional connection and one catch recess (5) can be brought into engagement with a locking member (21) of the steering system (3), which locking member can be adjusted between a release position and a locked position, **characterised in that** the bearing section (10) is provided on its support surface (12) with several lubricant pockets (24), disposed in a recessed manner, to receive lubricant.

2. Blocking sleeve as claimed in Claim 1, **characterised in that** the lubricant pockets (24) in the support surface (12) extend in a channel-like or groove-like manner, in particular over a support width (20).

3. Blocking sleeve as claimed in Claim 1 or 2, **characterised in that** the lubricant pockets (24) are disposed so as to be distributed over a peripheral contour (13) of the support surface (12) and form a profiled support surface (12).

4. Blocking sleeve as claimed in any one of Claims 1 to 3, **characterised in that** the lubricant pockets (24) extend in the direction of an extension axis (77), wherein the extension axis (77) is coaxial, normal or at an acute or obtuse angle (76) with respect to the longitudinal central axis (8) of the sleeve body (4).

5. Blocking sleeve as claimed in any one of Claims 1 to 4, **characterised in that** the lubricant pockets (24) in the support surface (12) are formed as round or elliptical recesses.

6. Blocking sleeve as claimed in Claim 1, **characterised in that** the lubricant pockets (24) in the planar support surface (12) are formed by profile troughs of the actual profile of the support surface (12) lying between profile cones, wherein this roughness profile has an average depth of roughness of 0.2 µm to 200 µm.

7. Blocking sleeve as claimed in any one of Claims 1 to 6, **characterised in that** the lubricant pockets (24) are uniformly distributed over the peripheral contour (13) of the support surface (12), in particular they form a symmetrical profiling.

8. Blocking sleeve as claimed in any one of Claims 1 to 7, **characterised in that** the sleeve body (4) consists of several join parts - connected to form a hollow profile - in particular preformed blanks (90) and a connection region (82) having a separating joint (45) is formed in each case between two adjacent join parts.

9. Steering system (3) of a motor vehicle, comprising a steering lock (22) having a locking member (21) which can be adjusted between a release position and a locked position, and a steering spindle (2) having a blocking sleeve (1) disposed thereon, wherein the blocking sleeve (1) is attached to the steering spindle (2) via at least one hollow profile-like bearing section (10) by means of a clamping tension, and a support surface (12), on the inside of the bearing section (10), of the blocking sleeve (1) is in frictionally engaged contact with an outer surface (15) of the steering spindle (2) and the locking member (21) in the locked position is engaged, in particular in a positive-locking manner, with at least one catch recess (5) disposed on the blocking sleeve (1), wherein the blocking sleeve (1) prevents the steering spindle (2) from rotating until a boundary torque value is reached and when the boundary torque value is exceeded the steering spindle (2) slips with respect to the blocking sleeve (1), **characterised in that** the blocking sleeve (1) is formed as claimed in any one of Claims 1 to 8.

## Revendications

1. Manchon d'immobilisation (1) pour une colonne de direction (2) d'un dispositif de direction (3) pour un véhicule automobile, qui forme un corps de manchon (4), qui présente plusieurs encoches de blocage (5) et au moins une section de logement (10) du genre profilé creux, avec une surface de support (12), située à l'intérieur, le corps de manchon (4) pouvant être monté, par friction, avec sa section de logement (10) au moins prévue, sur la colonne de direction (2), et une encoche de blocage (5) pouvant être mise en prise avec un organe de verrouillage (21) du dispositif de direction (3), qui peut être déplacé entre une position libre et une position verrouillée, **caractérisé en ce que** la section de logement (10) est pourvue, sur sa surface de support (12), de plusieurs creux de graissage (24), disposés en profondeur, pour recevoir un lubrifiant.

2. Manchon d'immobilisation selon la revendication 1, **caractérisé en ce que** les creux de graissage (24) s'étendent dans la surface de support (12), en particulier sur une largeur de support (20) en forme de rainure ou de gorge.

3. Manchon d'immobilisation selon revendication 1 ou 2, **caractérisé en ce que** les creux de graissage (24) sont disposés en étant répartis sur un contour périphérique (13) de la surface de support (12) et forment une surface de support (12) profilée.

4. Manchon d'immobilisation selon l'une des revendications 1 à 3, **caractérisé en ce que** les creux de graissage (24) s'étendent dans la direction d'un axe de projection (77), ledit axe de projection (77) étant disposé de manière coaxiale, normalement ou en formant un angle aigu ou un angle obtus (76) par rapport à l'axe central longitudinal (8) du corps de manchon (4).

5. Manchon d'immobilisation selon l'une des revendications 1 à 4, **caractérisé en ce que** les creux de graissage (24) sont formés dans la surface de support (12), en tant que cavités rondes ou en forme d'ellipses.

6. Manchon d'immobilisation selon la revendication 1, **caractérisé en ce que** les creux de graissage (24) sont formés dans la surface de support (12) plane par des évidements profilés, situés entre des aspérité arrondies, profilées du profil effectif de la surface de support (12), ce profil rugueux présentant une profondeur de rugosité moyenne de 0,2 µm à 200 µm.

7. Manchon d'immobilisation selon l'une des revendications 1 à 6, **caractérisé en ce que** les creux de graissage (24) sont régulièrement repartis sur le contour périphérique (13) de la surface de support (12) et forment en particulier un profilage symétrique.

8. Manchon d'immobilisation selon l'une des revendications 1 à 7, **caractérisé en ce que** le corps de manchon (4) est composé de plusieurs pièces à assembler, qui sont réunies en un profilé creux, en particulier de découpes (90) préformées, et qu'une zone de liaison (82) est respectivement formée, avec un joint de séparation (45), entre deux pièces assemblées.

9. Dispositif de direction (3) pour un véhicule automobile, qui présente un antivol de direction (22), avec un organe de verrouillage (21), qui peut être déplacé entre une position de libération et une position de verrouillage, et avec une colonne de direction (2), avec un manchon d'immobilisation (1), agencé sur celle-ci, le manchon d'immobilisation (1) étant monté, serré par pression, sur la colonne de direction (2), par l'intermédiaire d'au moins une section de logement (10) du genre profilé creux, et une surface de support (12) du manchon d'immobilisation (1), située à l'intérieur de la section de logement (10), étant en contact par friction, avec une surface extérieure (15) de la colonne de direction (2), et l'organe de verrouillage (21), en position de verrouillage, étant en prise, en particulier par emboîtement, avec au moins un encoche de blocage (5) disposée sur le manchon d'immobilisation (1), le manchon d'immobilisation (1) empêchant une rotation de la colonne de direction (2) jusqu'à ce que soit atteinte une valeur limite du couple de votation, et la colonne de direction (2) glissant par rapport au manchon d'immobilisation (1), lors du dépassement de la valeur limite du couple de rotation, **caractérisé en ce que** le manchon d'immobilisation (1) est conçu selon l'une des revendications 1 à 8.
